# EUROPEAN PATENT SPECIFICATION

(11) **EP 3 340 779 B1**
(45) Date of publication and mention of the grant of the patent: **03.03.2021**
(21) Application number: 16762888.2
(22) Date of filing: 19.07.2016
(51) Int. Cl.: A01K 11/00, A01K 1/12, A01K 7/02, A01K 1/06

(54) **SYSTEM FOR MILKING A GROUP OF DAIRY ANIMALS**
SYSTEM ZUM MELKEN EINER GRUPPE VON MILCHTIEREN
SYSTÈME DE TRAITE D'UN GROUPE D'ANIMAUX LAITIERS

(30) Priority: 24.08.2015 NL 2015335
(43) Date of publication of application: 04.07.2018
(73) Proprietor: Lely Patent N.V., 3147 PB Maassluis (NL)
(72) Inventor: VAN DEN BERG, Karel, 3147 PB Maassluis (NL); VAN ADRICHEM, Paulus Jacobus Maria, 3147 PB Maassluis (NL); WISSE, Dik-Jan, 3147 PB Maassluis (NL)
(74) Representative: Octrooibureau Van der Lely N.V.
(86) International application number: PCT/NL2016/050534
(87) International publication number: WO 2017/034393

(56) References cited:
- WO-A1-00/01226
- WO-A1-2014/055002
- US-A- 4 617 876

## Description

The invention relates to a system and a method for milking a group of milking animals, in particular cows.

WO 98/00006 discloses a device for milking of milking animals in a parlor. The parlor comprises an accommodation space with lying stalls and a feed table, and a milking space with a waiting area and a milking robot. A number of drinking troughs with water valves are arranged at the lying stalls. A further drinking trough is placed in the waiting area. From the accommodation space, the waiting area for the milking robot can only be accessed via a first one-way gate. The animals in the waiting area can only walk back to the accommodation space via the milking robot and a second one-way gate. When an animal in the accommodation space walks to one of the drinking troughs in the accommodation space, the animal is identified. A central control system determines whether the animal is ready for milking. If the animal need not be milked, the central control system opens the water valve of the drinking trough so that the animal can drink. If however the animal is ready for milking, the water valve remains closed. The animal cannot drink and seeks another drinking trough. The water valves on the other drinking troughs in the accommodation space also remain closed. The animal can only drink from the drinking trough in the waiting area. Since all milking animals have a very great need for water, an animal will continue to seek water until the animal finally arrives at the drinking trough in the waiting area of the milking robot. Thus the milking animals can be enticed to go to the milking robot.

By selectively denying them water in the accommodation space, it is indeed possible to move the milking animals to the milking robot, but with this known device the water intake of the animals is reduced, because the animals who are thirsty are refused water at one or more drinking troughs in the accommodation space before the milking animals are able to find the drinking trough in the waiting area. The reduced water intake has a disadvantageous effect on the milk production. In addition, the selective provision of water in the drinking troughs in the accommodation space leads to restlessness in the milking animals. Furthermore, denial of the basic need for drink in order to move the milking animals to the milking robot has a negative effect on the animals' well-being.

WO 00/01226 A1 discloses an apparatus for separating lactating animals such as cows. First, second and third animal stalls are arranged in a side by side configuration. Each stall is provided with a water supply means. The second and third animal stalls can be provided with a common automatic milking means. A separation gate associated with an identification means is arranged to allow an animal not due for milking into the first animal stall and an animal due for milking into the second or third animal stall.

One object of the invention is to provide an improved system for milking a group of milking animals.

This object is achieved according to the invention by a system according to claim 1 for milking a group of milking animals, in particular cows, wherein the system comprises:
- an accommodation space for the milking animals, which is preferably stationary and/or has a fixed floor and/or is fenced off,
- a plurality of milking stations, preferably stationary milking stations, which are each arranged or placed at a fixed location and next to each other, preferably laterally next to each other, wherein the milking stations each comprise an entry opening for entry of a milking animal from the accommodation space to the milking station,
- an automatic milking system for automatic milking of milking animals present in the milking stations, wherein in particular the milking system comprises milking cups and is configured for automatic connection of the milking cups to the teats of a milking animal,
- a drinking system which is configured to provide water for the milking animals, wherein the milking stations comprise the drinking system, and the drinking system of the milking stations is the only drinking facility for the milking animals in the accommodation space where the milking animals can drink their daily water intake and/or meet their daily water needs, and
   the accommodation space is configured such that the milking animals in the accommodation space can walk freely from the accommodation space to each entry opening.

In this patent specification, the term "water" or "drinking water" means every type of drink for milking animals. The water is of such a quality that the water is suitable for drinking by the milking animals. If required, a feed supplement and/or medication and/or other additives may be added to the water. In this patent application, water with such an additive is also referred to by the term "water" or "drinking water".

With an automatic milking system, the cows voluntarily go to the milking stations to be milked. The system according to the invention is configured such that the milking animals in the accommodation space can only meet their daily water needs by drinking in the milking stations. The milking stations form drinking stations. The drinking system of the milking stations is the only drinking facility for the milking animals in the accommodation space which is configured to offer a quantity of water which corresponds to the daily water intake or daily water needs of the milking animals. In other words, the drinking system of the milking stations is the only drinking facility which can offer the milking animals enough water to meet the daily water needs of the milking animals. According to the invention, it is guaranteed that the milking animals voluntarily visit the milking stations sufficiently often. With the system according to the invention, it is not necessary or rarely necessary to collect milking animals manually and bring them to the milking station.

Preferably, the drinking system of the milking stations is the only drinking facility for the milking animals in the system. The milking animals can only drink in the milking stations. In order to drink, a milking animal must visit one of the milking stations. It is however also possible that the accommodation space has another drinking facility, the capacity of which is however so small that it cannot meet the daily water needs of the milking animals.

Although the milking animals can meet their daily water needs only by drinking in the milking stations, in contrast to the prior art described above, the water intake by the milking animals is fully adequate with the system according to the invention. According to the invention, water is available very easily for all milking animals in the accommodation space.

Firstly, the drinking system of the milking stations is configured to make water available to each milking animal present in one of the milking stations. Milking animals which are thirsty can drink water in the milking stations at all times. Although the milking animals can only meet their daily water needs by drinking in the milking stations, water is always available there for each milking animal which visits the milking station, for example via a supply valve which can be operated by a milking animal. The system according to the invention does not comprise drinking troughs in the accommodation space where a milking animal can drink water at some times and where the water supply is shut off at other times in order to entice said milking animal to go to the milking stations. In the drinking system according to the invention, at no time is water refused to milking animals who visit the milking stations to drink. This is favourable for the animals' well-being and calmness in the herd, and also for milk production.

Secondly, the milking stations according to the invention are totally freely accessible to the milking animals from the accommodation space. Each entry opening can be reached individually, freely via a walkable connection from the accommodation space. In particular, the accommodation space is configured such that the milking animals can walk freely around in the accommodation space, and the milking animals can walk freely from every location in the accommodation space to each entry opening. To drink water, the milking animals in the accommodation space are able to walk to the drinking system in the milking stations without compulsion.

Therefore with the system according to the invention, it is guaranteed that each milking animal frequently visits the milking stations, whereby milking animals need hardly, if at all, be fetched for milking. At the same time, with the system according to the invention, the water intake of the milking animals is sufficient to maintain optimum milk production of the milking animals, while maintaining calmness in the herd and taking into account the animals' well-being.

It is noted that the feature "the milking animals in the accommodation space can walk freely from the accommodation space to each entry opening" means that the milking animals can reach the milking stations from every location in the accommodation space without passing an obstacle device which can be operated by a control system to obstruct access to the milking stations. The accommodation space is configured such that every location in the accommodation space is connected to each entry opening via a walkable connection which does not contain a gate which can be controlled by an actuator device, such as a selection gate. It is not excluded that a route from a location in the accommodation space to the milking stations may comprise one or more one-way gates. Such one-way gates do not form an obstacle device - a milking animal can walk unhindered through the one-way gate, i.e. the milking animal is not prevented from reaching the milking stations. Preferably however, there is no gate which can be activated by a milking animal, such as a one-way gate, either in the system according to the invention. The accommodation space preferably contains no gate which can be activated by an actuator device, and no gate which can be activated by a milking animal. Thus the milking animals are not steered or forced to walk along one or more prescribed routes to the milking stations. The milking animals can preferably walk totally freely and unhindered from every location in the accommodation space to the entry openings. Furthermore, the accommodation space preferably contains no waiting area adjacent to the milking stations which is accessible via a gate which can be activated by an actuator device or a milking animal. According to the invention, there is preferably totally free traffic of milking animals. Incidentally, the accommodation space may be connected by means of a gate, which can be activated by an actuator device, to a further accommodation space in which the milking animals may also walk around freely, such as a separation space or grazing space.

According to an embodiment of the invention, each entry opening of the milking stations is permanently open. In particular, none of the milking stations has an access gate which can be operated by an actuator device between an open position in which the entry opening is open, and a closed position in which the entry opening is closed. The milking animals in the accommodation space can not only walk to the entry openings of the milking stations without compulsion, but can also enter the milking stations through the permanently open entry openings freely and unhindered in order to drink water. In this way, the milking stations are completely freely accessible to the milking animals in the accommodation space. This is particularly advantageous for the water consumption of the milking animals and the visit frequency to the milking stations. Incidentally, according to the invention, it is not excluded that a milking station is taken out of use by closing the entry opening of that milking station, so that the milking station is no longer accessible to the milking animals, for example if there is a fault on a component of the milking station, or in connection with cleaning of the milking station. The term "permanently open" means that the entry openings of the milking stations which are normally in use always remain open.

In a preferred embodiment according to the invention, the milking stations comprise at least three milking stations, preferably at least four or five, or six or seven or eight milking stations. In particular, the ratio between the number of milking animals to be kept in the accommodation space and the number of milking stations is important. If the accommodation space is configured to keep a predefined number of milking animals, the number of milking stations is preferably adapted to the predefined number of milking animals, such that the system comprises at least one milking station for every 20 milking animals, preferably at least one milking station for every 15 milking animals, further preferably at least one milking station for every 12 milking animals, and most preferably at least one milking station for every 10 milking animals. In other words, the accommodation space is preferably configured to keep a group of a milking animals in the accommodation space, while the milking stations comprise at least *q* milking stations, wherein *a* = *q***b* + *r* with *0 r b* and *b 30,* preferably *b* 20 and more preferably *b 12*, in particular *b 10.* The number of milking stations according to the invention is relatively large. Thus in practice, it never occurs or rarely occurs that all milking stations are occupied by milking animals at the same time. The number of milking stations according to the invention is selected such that, in practice, almost always one or more milking stations remain free. Consequently, it is guaranteed that the milking animals always or almost always have unrestricted access to water. Despite the fact that, according to the invention, the milking animals can only meet their daily water needs by drinking in the milking stations, the water intake of the milking animals required for milk production remains guaranteed.

The feature the accommodation space is configured to keep a predefined number of milking animals means that the accommodation space is designed to contain a predefined number of milking animals, such as 60-70 milking animals, during the lactation phase, wherein for example the surface area (m²) of the accommodation space and the number of facilities in the accommodation space is adapted to the predefined number of milking animals to be kept. If the accommodation space comprises lying stalls, the number of lying stalls is for example substantially equal to the number of milking animals to be kept, i.e. an accommodation space for keeping a group of for example 60 milking animals, preferably comprises approximately 60 lying stalls. In general, in such an accommodation space only one generally known milking robot is installed - a single milking robot for 60 milking animals is normal in practice. According to the invention, the ratio between the number of milking stations and the number of lying stalls is however much greater. In one embodiment in which the accommodation space contains a number of lying stalls for the milking animals, the system comprises at least one milking station for every 20 lying stalls, preferably at least one milking station for every 15 lying stalls, more preferably at least one milking station for every 12 lying stalls, and most preferably at least one milking station for every 10 lying stalls, i.e. for example an accommodation space with 60 lying stalls comprises, according to the invention, 6 or more milking stations. The feed facilities of the accommodation space, such as one or more concentrate feeding stations and the length of the feed fence, are adapted to the number of milking animals to be kept in the accommodation space.

In an embodiment according to the invention, the milking system is configured to milk a milking animal in a milking station automatically provided that said milking animal fulfils a predefined milking criterion, wherein the drinking system of the milking stations is configured to supply water to each milking animal present in one of the milking stations, irrespective of whether said milking animal fulfils the milking criterion. Not only milking animals which fulfil the milking criterion, but also milking animals which do not fulfil the milking criterion may drink water in the milking stations. The drinking system of the milking stations is in particular configured to make water available, in unlimited quantities (ad libitum), for each milking animal present in one of the milking stations, irrespective of whether or not said milking animal fulfils the milking criterion. Each milking animal visiting one of the milking stations may drink in said milking station, irrespective of whether or not said milking animal is ready for milking. In this way, with the system according to the invention, the milking animals are conditioned to associate the milking stations primarily with drinking, and only secondarily with milking. The milking stations form drinking stations for the milking animals. As a result, the milking animals are attracted to the milking stations naturally so that the visit frequency to the milking stations is particularly high, and the water consumption is totally adequate for optimum milk production.

According to an embodiment of the invention, it is preferred that the automatic milking system for automatic milking of milking animals present in the milking stations comprises milking cups and a robot device which is movable relative to the milking stations, such that in each milking station, by means of the robot device, milking cups can be connected automatically to the teats of a milking animal present in said milking station. In the prior art, normally the aim is to achieve as high a utilization level as possible of a milking robot. The milking robot is relatively expensive, so its capacity must be utilized as optimally as possible. With the system according to the invention, the number of milking stations is such that, in practice, almost always one or more milking stations are free. Nonetheless, the system according to the invention is profitable because relatively costly components are shared by several milking stations. The robot device according to the invention is movable so it can connect milking cups in every milking station, whereby each milking station need not have its own robot device. The costs per milking station according to the invention are relatively low due to the use of a common robot device for the milking stations. Thus there is no economic obstacle to having free milking stations, and the system can economically be designed with an excess number of milking stations, so that the milking animals always have access to water for drinking.

According to an embodiment of the invention, the robot device can be configured in various ways. In one embodiment, the robot device comprises an autonomous self-propelled trolley, wherein the milking cups are arranged on the trolley, and wherein the trolley is configured to travel to each milking station, and wherein the trolley is configured for automatic connection of the milking cups of the trolley to the teats of a milking animal present in the milking station. For example, each milking station comprises a floor on which a milking animal can stand, and the system furthermore comprises an animal-free space which extends on the side of the milking stations opposite the accommodation space, wherein the animal-free space comprises a floor which is connected to the floor of each milking station via a connection through which the trolley can travel. Initially, for example, the trolley is on the floor of the animal-free space. When a milking animal must be milked in one of the milking stations, the milking system controls the trolley such that the trolley automatically travels over the floor of the animal-free space to the floor of that milking station, up to below the teats of the milking animal. The trolley is autonomous and self-propelled, i.e. the trolley comprises a drive and steering system for driving and steering the trolley. The drive and steering system preferably comprises at least one electric motor. When the trolley has travelled to below the animal ready for milking, the milking cups are automatically connected to the teats of said milking animal. The milking animal is milked while the milking cups are connected. After the milking animal has been milked, the trolley can travel back to the floor of the animal-free space. The trolley is then again ready for a following milking in another or possibly the same milking station.

In an alternative embodiment, the robot device comprises a robot arm which is provided with a first arm part that is movably connected to a fixed supporting structure, and at least one second arm part which is movably connected to the first arm part. For example, the first arm part is connected to the supporting structure pivotably about a substantially vertical pivot axis, for example by means of a ball joint, wherein the second arm part is connected telescopically movably to the first arm part. In this case, the milking stations may be positioned around the pivot axis, i.e. the milking stations then lie laterally next to each other following a circle arc, such that the milking stations are oriented with their head sides towards the pivot axis. By moving the first arm part about the pivot axis, the robot arm can be aligned with each of the milking stations for connecting the milking cups in each milking station.

The robot arm may however also be guided movably along a guide rail which extends transversely relative to the long sides of the milking stations arranged next to each other. In this case, the robot arm is movable rectilinearly along the guide rail, so that the robot arm can connect the milking cups in each milking station. The robot arm may comprise a milk discharge line with which the milk is discharged from the milking cups. Such a robot arm for connecting milking cups may be designed and produced reliably using techniques known in themselves in practice.

According to an embodiment of the invention, it is possible that the robot arm is provided with the milking cups. The milking cups are arranged on the robot arm. The milking cups are connected to the robot arm, and the robot arm can connect the milking cups of the robot arm one by one to the teats of a milking animal. Such a robot arm may be produced and used particularly reliably.

In addition, it is possible that the milking system is provided with a milking cup holder which is configured for receiving milking cups which are not being used, wherein the robot arm is provided with at least one gripper member which is configured to take at least one milking cup from the milking cup holder and connect it to a teat of a milking animal present in one of the milking stations. In this case, the robot arm takes a first milking cup from the milking cup holder and connects the milking cup to a teat, then the robot arm takes a second milking cup from the milking cup holder, and so on. Such a robot arm is comparable to a robot arm of a generally known milking robot and may be produced and used reliably.

Each milking station may comprise a set of milking cups for connection to the teats of a milking animal present in the milking station. Also, the milking cups may for example be arranged in sets in the animal-free space in front of each milking station. It is also possible that a common set of milking cups is shared by several milking stations. The milking cups are then used successively in several milking stations.

In one embodiment according to the invention, the accommodation space has a feed area for feeding the milking animals, comprising for example a feed fence and/or a concentrate feeding station, and a rest area for resting of the milking animals, for example lying facilities where the milking animals can lie down, such as lying stalls, and wherein the accommodation space is configured such that the milking animals in the accommodation space can walk freely around between the feed area and the rest area, and wherein the accommodation space is furthermore configured such that the milking animals in the accommodation space can walk freely from the feed area and from the rest area to each entry opening. The accommodation space is configured such that the milking animals can walk around freely in the accommodation space between the feed area, the rest area and each entry opening. Totally free cow traffic is possible in the accommodation space, while the milking animals can walk unhindered into the milking stations from every location in the accommodation space in order to drink. Thus it is possible to milk the milking animals while the natural behaviour of the milking animals is not disrupted or is scarcely disrupted.

Also, the milking animals are completely free to walk to and fro between the feed area and the rest area.

If the feed area comprises a feed fence with feed places, the accommodation space is preferably configured such that the milking animals in the accommodation space can walk freely and/or unhindered from each feed place to each entry opening. Each feed place of the feed fence is preferably connected to each entry opening via a walkable connection which contains no gate which can be activated by an actuator device and/or by a milking animal. After a milking animal has eaten at the feed fence, said milking animal can walk without compulsion to the milking stations to drink. If the lying area comprises lying stalls, the accommodation space is preferably configured such that the milking animals in the accommodation space can walk freely and/or unhindered from each lying stall to each entry opening. Each lying stall is preferably connected to each entry opening via a walkable connection which contains no gate which can be activated by an actuator device and/or by a milking animal.

In one embodiment according to the invention, each milking station comprises two long sides and two short sides, wherein the long sides of the milking stations are arranged next to each other, and wherein the entry opening of each milking station is arranged on one of the short sides of said milking station. Viewed from above, the milking stations are elongate and are positioned with their long sides laterally next to each other. Preferably, the milking stations are adjacent to each other. The milking animals stand close together in the milking stations. This reinforces the herd behavior of the milking animals so that the milking animals feel drawn to visit the milking stations.

For example, the milking stations are arranged parallel adjacent to each other laterally, i.e. the entry openings of the milking stations are substantially aligned relative to each other. The milking stations may however also be placed laterally next to each other in an arc, in particular following a circle arc. It is possible in this case that the long sides of the milking stations to some extent run tapering towards each other. The entry openings are preferably on the short sides which extend along the outer periphery, while the drinking system is arranged on the short sides which lie on the inner periphery. The milking stations are for example positioned around a substantially vertical pivot axis of a pivotable robot arm.

According to an embodiment of the invention, it is possible that each milking station is configured such that a milking animal which has walked forward into said milking station through the entry opening thereof can only leave said milking station via the entry opening by walking backward. This corresponds to the natural drinking behaviour of the milking animals, so that the milking animals experience drinking in the milking stations as pleasant.

In an embodiment according to the invention, the drinking system of the milking stations is configured to provide water in unlimited quantities (ad libitum) for each milking animal which visits one of the milking stations. The milking animals which visit the milking stations are not refused water, and the quantity of water offered is not limited. This further improves the availability of sufficient drinking water for the milking animals, which is favourable for the water consumption of the milking animals and the milk production.

In one embodiment, the drinking system of the milking stations comprises at least one drinking trough which is arranged at the head ends of the milking stations lying opposite the entry openings, wherein each milking station comprises a neck lock device or neck hold device which is provided with an actuator device and can be moved by said actuator device between a locked state in which a milking animal, which is situated with its head above or in the drinking trough of said milking station, can be locked at the neck by the neck lock device, and preferably can be held and/or secured in said milking station thereby, and an open state in which a milking animal present in said milking station is free to move its head in and/or out of the neck lock device and/or in and/or out of the drinking trough, and preferably is free to leave said milking station.

The drinking system comprises a drinking water source, for example a water connection, which is connected to the water mains, or another water supply. The drinking water source is connected to the drinking trough by means of a water pipe system. Each milking station comprises a respective neck lock device or neck hold device for locking a milking animal at the neck. The at least one drinking trough is preferably positioned relative to the neck lock device of each milking station such that a milking animal present in one of the milking stations must push its head and/or neck through the neck lock device of said milking station in order to drink water from said drinking trough. By means of the neck lock device, a milking animal can be enclosed at the neck to prevent the milking animal from being able to withdraw its head from the drinking trough. According to the invention, a milking animal is not enclosed in the milking stations between fences and gates, as with the generally known milking robot. With the permanently open entry openings of the milking stations, and by locking the milking animals at the neck in order to hold the milking animals in the milking stations, relatively open milking stations are achieved which the milking animals experience as particularly pleasant.

It is preferred that the drinking system of the milking stations comprises a plurality of separate drinking troughs, wherein each milking station comprises one of said drinking troughs. Each milking station comprises a separate drinking trough. The drinking trough of each milking station is preferably positioned relative to the neck lock device of said milking station such that a milking animal present in said milking station must push its head through the neck lock device of said milking station in order to drink water from said drinking trough. The water in the separate drinking troughs remains relatively fresh, which is favorable for the drinking behavior of the milking animals.

It is also possible that, instead of separate drinking troughs for each milking station, the drinking system comprises one or more common drinking troughs, i.e. two or more milking stations situated next to each other share a common drinking trough from which milking animals present in said milking stations can drink. Evidently, the drinking system may also comprise only one common drinking trough for all milking stations located next to each other.

When separate drinking troughs are used, the drinking system preferably comprises a supply device for the supply of water to each of the drinking troughs, wherein the supply device is configured for determining the respective quantity of water supplied to each of the drinking troughs by the supply device. The quantity of water supplied to each of the drinking troughs can be used to calculate the quantity of water which the milking animals have drunk therefrom. Therefore the water intake and drinking behavior of the milking animals can be monitored individually.

According to an embodiment of the invention, it is preferred that the milking stations, at the head ends thereof lying opposite the entry openings, are delimited by a fixed drinking fence on which the neck lock devices of the milking stations are arranged, wherein the at least one drinking trough is positioned along and/or at a distance from the drinking fence such that a milking animal present in one of the milking stations must push its head and/or neck through the drinking fence in order to drink water from the drinking trough. The neck lock device of each milking station is integrated with the drinking fence or arranged on the drinking fence. The short sides of the milking stations lying opposite the entry openings are arranged along the drinking fence. The drinking system is configured to provide water to each milking animal which has pushed its head through the drinking fence in one of the milking stations. In this case, the drinking system is configured such that water can only be reached by a milking animal which has pushed its neck and/or head through the drinking fence in a milking station. This guarantees that each milking animal is standing at the correct position in the milking station and has the correct attitude for being held at the neck reliably and safely by means of the neck lock device.

According to an embodiment of the invention, the drinking fence is arranged stationarily and/or at a fixed location. The drinking fence is formed for example by separate fence parts which are arranged at a distance from and substantially aligned to each other along the short sides of the milking stations lying opposite the entry openings. The drinking fence may however be configured differently, for example as an attached fence. The drinking fence borders the milking stations on the head ends/short sides thereof lying opposite the entry openings. The milking animals in adjacent milking stations are positioned during drinking with their heads next to each other. This promotes the water consumption by the milking animals as a result of herd behaviour.

In one embodiment, the system comprises an animal identification system for identifying each milking animal present in one of the milking stations. The animal identification system is connected to a control system which for example comprises a computer system. Information may be stored in the computer system to determine whether a milking animal present in a milking station fulfils a milking criterion, i.e. is ready for milking. The milking criterion is for example dependent on the time which has elapsed since the last milking; a milking animal then fulfils the milking criterion if at least a predefined period, such as 6 hours, has elapsed since the last milking of said milking animal. The animal identification system comprises for example transponders which are attached to each milking animal, such as in a collar, and readout units for reading the transponders, wherein the readout units are arranged in each milking station.

The invention also relates to a method according to claim 16 for milking a group of milking animals, in particular cows, in a system as described above, wherein the method comprises:
- the provision of water by means of the drinking system to each milking animal which visits one of the milking stations,
- the milking of each milking animal which visits one of the milking stations, on condition that said milking animal fulfils a predefined milking criterion.

The method according to the invention has the same technical advantages as described above in relation to the system according to the invention.
The invention will now be explained in more detail below with reference to the attached drawing.
Figure 1 shows a diagrammatic top view of a first embodiment of a system according to the invention.
Figure 2 shows an enlarged detail II of figure 1.
Figures 3a and 3b show perspective views of one of the milking stations of the system shown in figure 1, wherein the neck lock device is respectively in the free state and in the locked state.
Figures 3c and 3d show front views of the milking station shown in figures 3a and 3b.
Figures 4a - 4d show side views of one of the milking stations of the system shown in figure 1, in which a milking animal is secured and milked.
Figure 5 shows a diagrammatic top view of a second embodiment of a system according to the invention.
Figures 6a - 6c show side views of one of the milking stations of the system shown in figure 5, in which a milking animal is secured and milked.
Figure 7 shows a side view in cross section along line VII-VII from figure 4a.

Several inventions are contained in the exemplary embodiments shown. In this description of the figures, several inventions and features thereof are described. Although the exemplary embodiments show these features in combination, these features have significance alone, i.e. these features can be applied independently of each other. In addition, a system according to the invention need not have all features in combination; a system according to the invention may also contain only a number of these features. In other words, a system according to the invention may contain all possible combinations of one or more of these features.

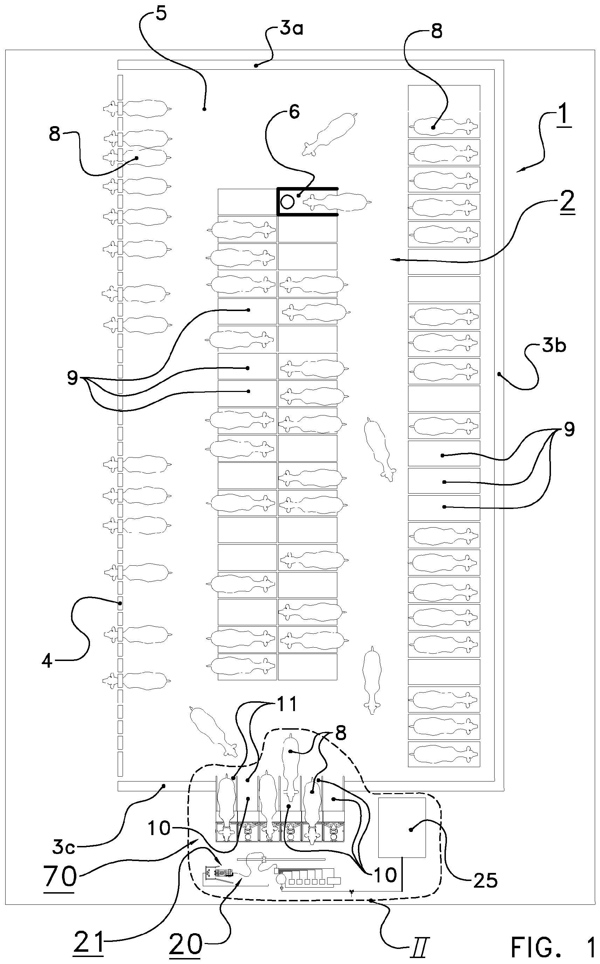

The system shown in figure 1 for milking a group of milking animals, in this exemplary embodiment cows 8, is indicated as a whole with 1. The system 1 comprises an accommodation space 2 which is fenced off by walls or fencing 3a, 3b, 3c and a feed fence 4. The accommodation space 2 is stationary, i.e. immovable, in particular non-rotatable. The accommodation space 2 comprises a fixed floor 5, for example a grating or grid floor or a solid floor. The accommodation space 2 is formed by a barn space, i.e. the cows 8 are inside the barn. The accommodation space 2 may be connected via a selection gate to another accommodation space such as a separation space or a grazing space (not shown).

The accommodation space 2 comprises a feed area for feeding the milking animals, which in this exemplary embodiment is formed by a feed fence 4 and a concentrate feeding station 6. The accommodation space 2 comprises a rest area for resting the cows 8. In this exemplary embodiment, the rest area is formed by lying stalls 9 in which the cows 8 can lie down. The rest area may however also be configured without lying stalls.

The accommodation space 2 is configured to keep a predefined number of cows during the lactation phase. The surface area (m²) of the accommodation space 2 and the facilities in the accommodation space 2 are adapted to the predefined number of cows to be kept. Since almost all cows rest overnight in the accommodation space, in general one lying stall 9 per cow 8 for example is considered the norm, i.e. the number of lying stalls 9 is substantially equal to the number of cows to be contained. In this exemplary embodiment, the accommodation space 2 is configured to keep 60 cows, and the accommodation space 2 therefore comprises 60 lying stalls. Also, for example, the feed facilities of the accommodation space 2, such as the length of the feed fence 4, are adapted to the number of cows to be contained in the accommodation space 2. In this exemplary embodiment, the system 1 comprises six milking stations 10, i.e. there is one milking station per ten cows 8. The number of milking stations 10 may however be greater or smaller, for example the system 1 may also have seven or eight milking stations 10, or four or five milking stations 10. If the accommodation space 2 is configured for more or fewer than 60 cows 8, the number of milking stations 10 is adapted accordingly. The number of milking stations 10 is matched to the number of milking animals to be kept, such that the system 1 comprises at least one milking station 8 for every 20 milking animals 8, preferably at least one milking station 10 for every ten milking animals 8.

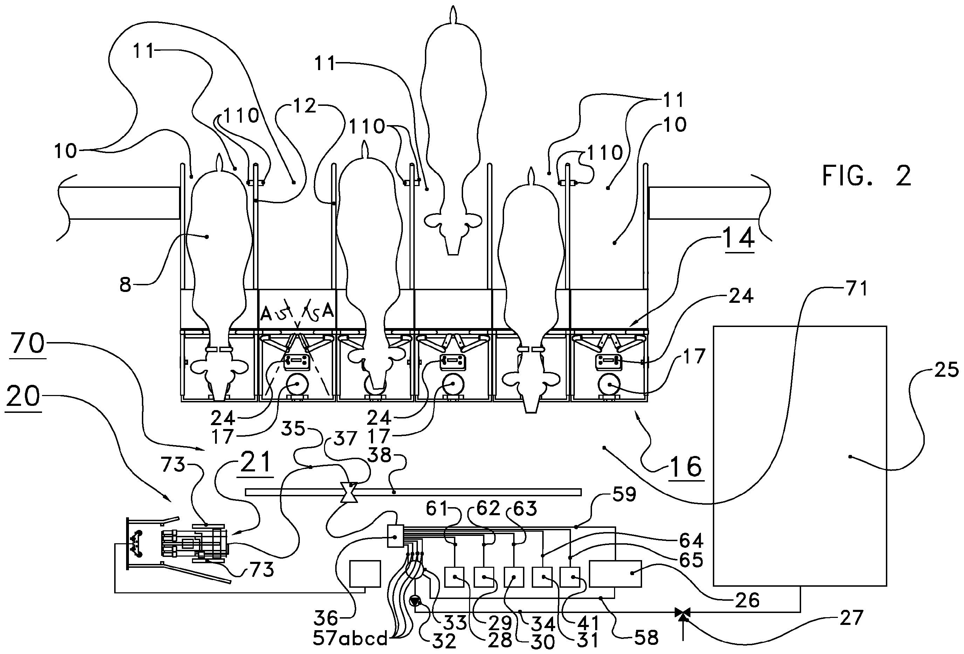

The milking stations 10 are each arranged at a fixed location and laterally next to each other. Each milking station 10 has two long sides and two short sides; the milking stations 10 are each elongate. The milking stations 10 are arranged with the long sides laterally adjacent to each other (see figure 1 and 2). In figures 1 and 2, the milking stations 10, seen in top view, are substantially rectangular. The milking stations 10 may however also be configured differently. For example, the milking stations may be placed next to each other following a circle arc (not shown).

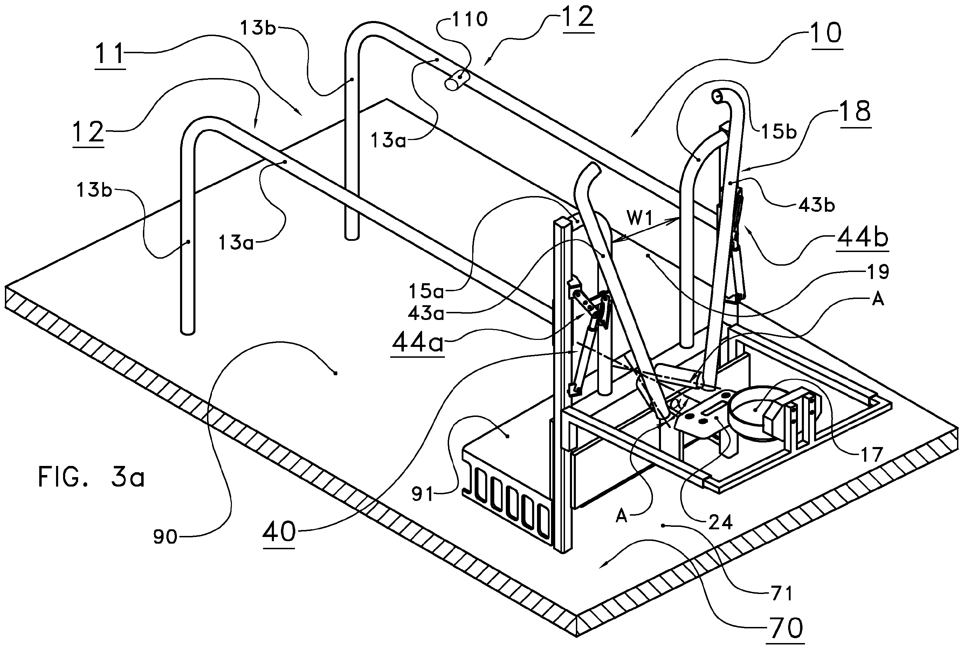

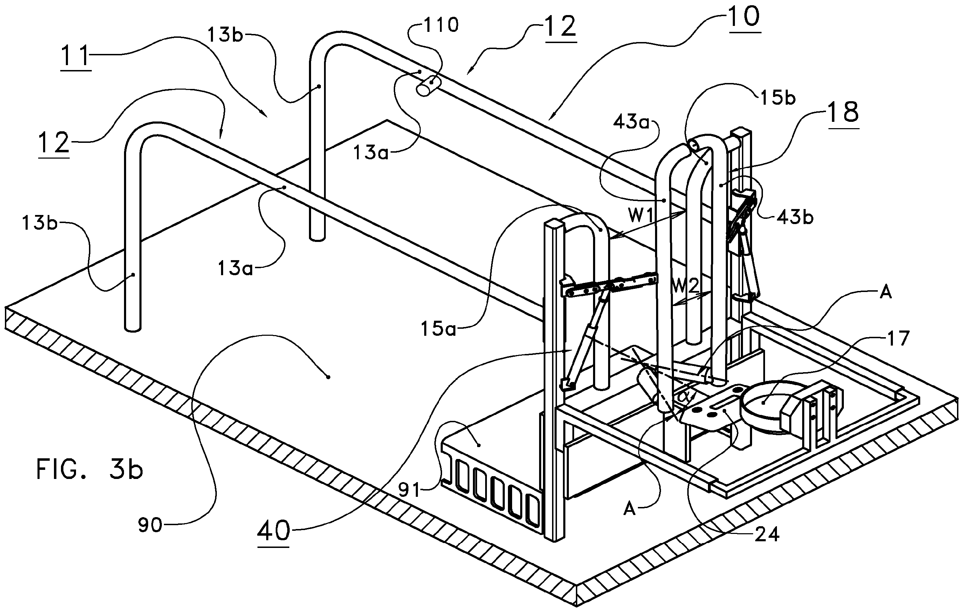

The milking stations 10 are mutually separated by separation fences 12 formed by a horizontal and a vertical bar part 13a, 13b (see figures 2, 3a and 3b). The horizontal bar part 13a is relatively low, for example around 60-120 cm high. The cows 8 in adjacent milking stations 10 stand closely next to each other and have mutual contact because the milking stations 10 are only separated from each other by the open separation fences 12. In this way, the herding behavior of the cows in the milking stations 10 is reinforced.

The milking stations 10 each comprise an entry opening 11 for entry of a cow 8 from the accommodation space 2 to the milking station 10. The entry opening 11 of each milking station 10 is arranged on one of the short sides of the milking station 10. As shown most clearly in figures 2, 3a and 3b, none of the milking stations 10 has an access gate which is operated by an actuator device between an open state in which the entry opening 11 is open, and a closed state in which the entry opening 11 is closed. The entry openings 11 of the milking stations 10 are each open permanently. Incidentally, according to the invention, it is not excluded that a milking station is taken out of use by closing the entry opening of that milking station, so that the milking station is no longer accessible to milking animals, for example for maintenance or cleaning activities in that milking station. During normal operation, the entry openings 11 are however permanently open. If a milking station 10 is not occupied by a cow 8, there is no obstacle to one of the cows 8 entering said milking station 10 from the accommodation space 2. The unoccupied milking stations 10 are totally freely accessible for the cows 8.

On the short sides or head ends opposite to the entry openings 11, the milking stations 10 are mutually aligned along a fixed fence 14 (see figure 2). In this exemplary embodiment, the fence 14 for each milking station 10 has two fence parts 15a, 15b which, viewed in the transverse direction of the milking station 10, are arranged spaced apart from each other, leaving free a central opening 19 with a first width *w₁* such that the neck of a cow 8 can pass through as far as the shoulders. A cow 8 can enter a milking station 10 until the shoulders of the front legs of the cow 8 come to rest against the fence parts 15a, 15b on either side of the central opening. Since the fence parts 15a, 15b are arranged fixedly, a cow 8 can only leave each milking station 10 by walking backward again through the entry opening 11. The entry opening 11 therefore also forms an exit opening.

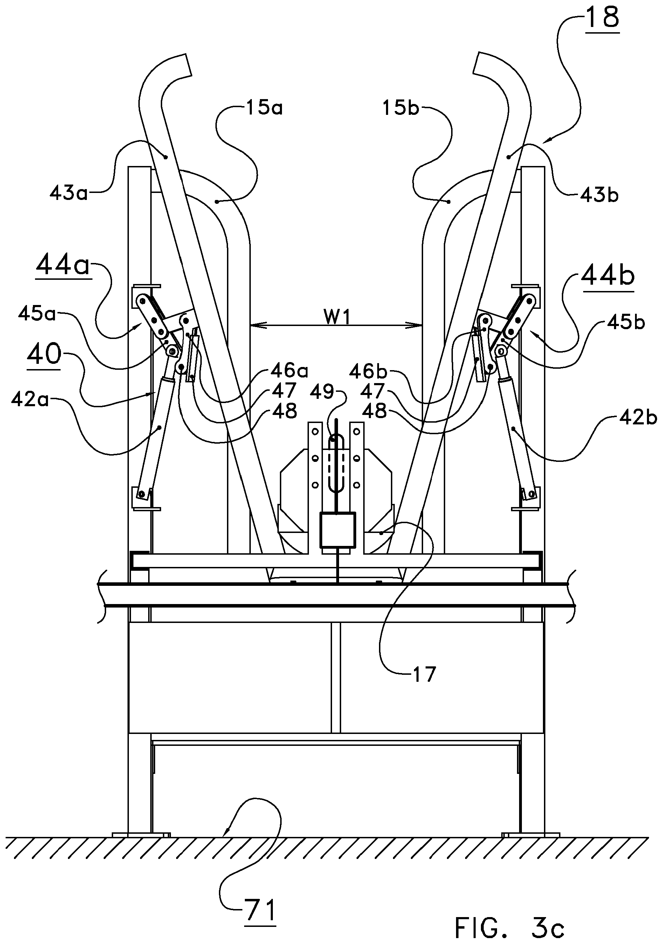

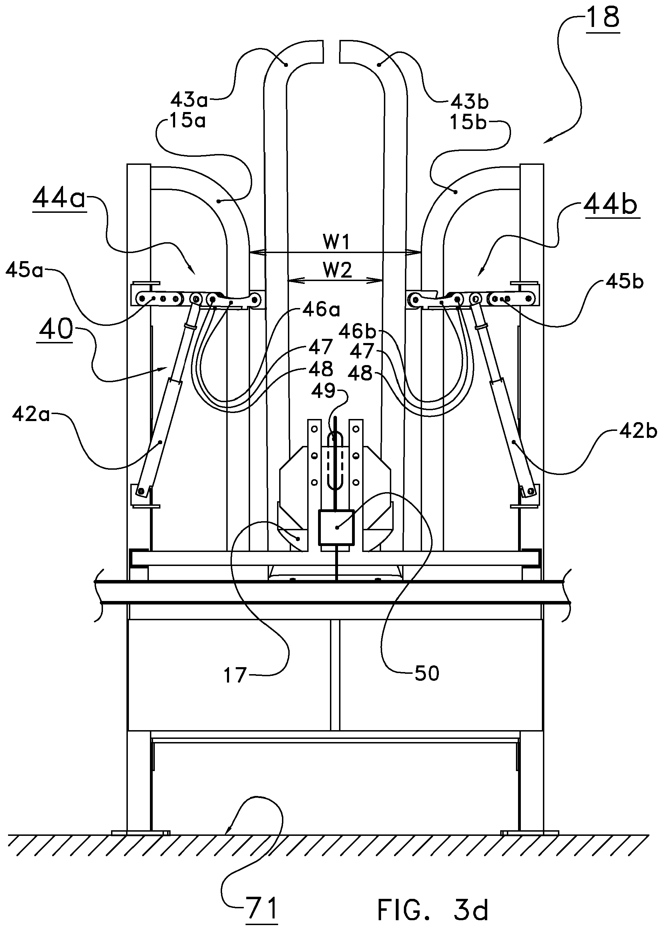

Each milking station 10 furthermore comprises a neck lock device 18 which, in this exemplary embodiment, is arranged on the fence parts 15a, 15b. The neck lock device 18 of each milking station 10 can be operated by an actuator device 40 between a locked state or secured state (see figures 3b and 3d), in which a cow 8 in the milking station 10 is held by the neck and hence secured and/or held in the milking station 10, and an open state (see figures 3a and 3c), in which a cow 8 is free to move its head in and out of the neck lock device 18 and is free to leave the milking station 10. Thus the neck lock device 18 of each milking station 10 can be actively operated. The neck lock device 18 will be described in more detail below.

In this exemplary embodiment, the milking stations 10 have a drinking system 16 which is configured to provide water for the milking animals 8. The drinking system 16 comprises a plurality of drinking troughs 17; each milking station 10 is provided with its own drinking trough 17. The drinking troughs 17 are connected by a pipe system to a water supply, for example a water mains connection. Water from the water mains connection is supplied via the pipe system to the drinking troughs 17. The water in the separate drinking troughs 17 remains relatively fresh, which is favorable for the drinking behavior of the milking animals. It is however also possible that several milking stations 10 have a common drinking trough, or even that a single drinking trough is provided for all milking stations 10 (not shown).

The drinking trough 17 of each milking station 10 is positioned at a distance behind the fence parts 15a, 15b of said milking station 10, such that a cow 8 in said milking station 10 must push its head and neck through the central opening 19 between the fence parts 15a, 15b, and through the neck lock device 18 in the open state, in order to drink water from the drinking trough 17. In other words, the drinking system 16 is configured such that water can only be reached by a cow 8 in a milking station 10 which has pushed its head and neck through the neck lock device 18 in the open state. In this way, a cow 8 in a milking station 10 which wishes to drink is secured safely and reliably at the neck by the neck lock device 18 of said milking station 10. This will be explained further below.

In order to identify the cows in the milking stations 10, the system 1 has an animal identification system, known in itself, for identifying each milking animal which visits one of the milking stations. The animal identification system comprises for example transponders 23 which are attached to collars worn by the cows 8, and readout units 24 for reading the transponders 23. The readout units 24 are arranged at the head end of each milking station 10, in particular along the fence 14 (see figure 2). When a cow 8 walks into one of the milking stations 10 and then pushes its head through the fence 14, the transponder 23 in the collar of the cow 8 is read by the readout units 24 of said milking station 10, so that the cow 8 is identified. A control system 41, for example comprising a computer, laptop and/or smartphone, is actively connected to the readout units 24. The identity of the identified cow 8 is entered in the control system 41.

The cows can be milked in the milking stations 10 by an automatic milking system 20. With an automatic milking system, the cows voluntarily go to the milking stations 10 to be milked. The automatic milking system 20 comprises milking cups 22. The milking system 20 is configured to connect the milking cups 22 automatically to the teats of a cow 8 in a milking station 10, and to milk said cow 8 automatically provided that said cow 8 complies with a predefined milking criterion, i.e. is ready for milking. The milking system 20 comprises the control system 41 or is actively connected therewith. The control system 41 determines whether a cow 8 which is identified on a visit to a milking station 10 fulfils the milking criterion, i.e. must be milked. Different milking criteria are possible, for example on the basis of the time which has elapsed since the last milking of the cow, or on the basis of the expected milk yield, which is dependent on the time since the last milking and the milk production rate in the udders, which can be calculated from historical data from previous milkings of the cow, or still other milking criteria.

The milking stations 10 are placed adjacent to an animal-free space 70 which is closed for the milking animals present in the accommodation space 2. The animal-free space 70 forms a "clean" space, i.e. the cows 8 have no access to the animal-free space 70 and cannot walk there. The animal-free space 70 has a substantially flat floor 71. Various components of the milking system 20 are arranged in the animal-free space 70. This will be explained further below.

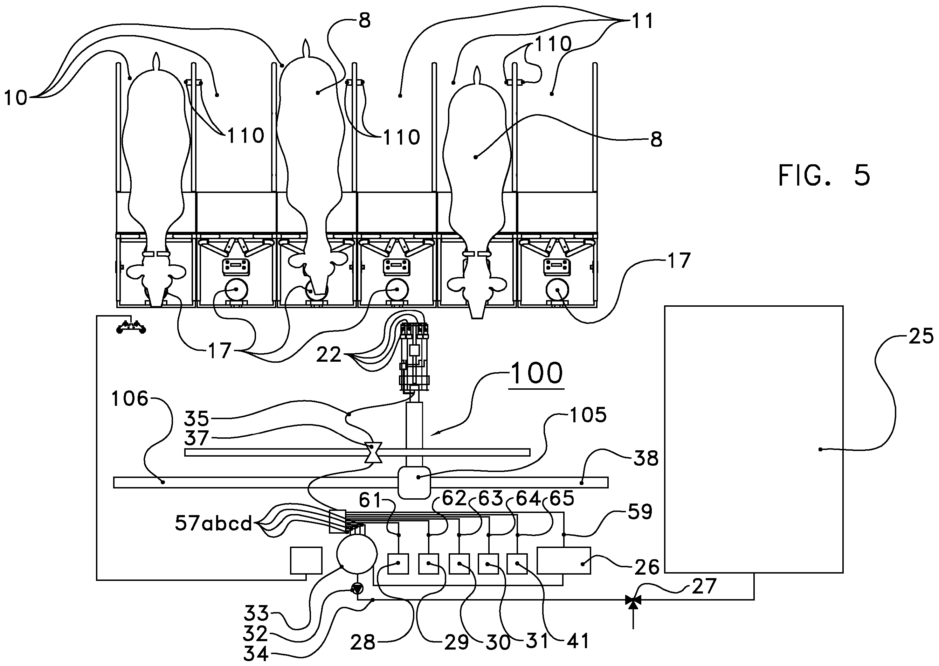

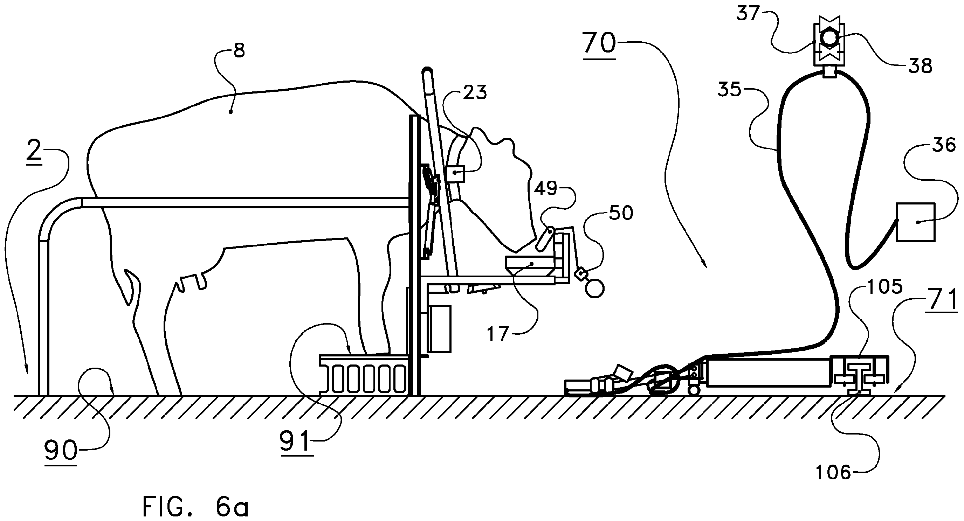

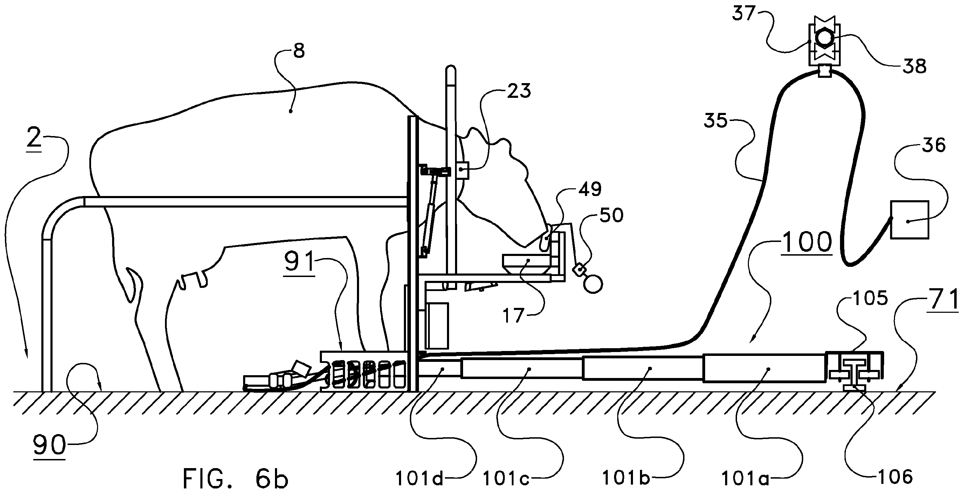

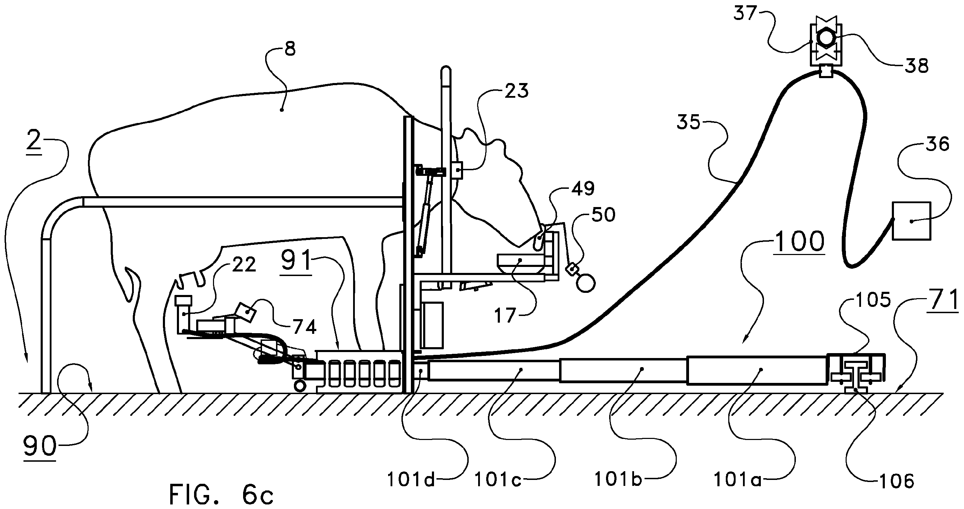

The automatic milking system 20 comprises a robot device which is movable relative to the milking stations 10 such that, in each milking station 10, milking cups 22 can be connected automatically by means of the robot device to the teats of a cow 8 present in said milking station 10. The robot device may be configured in various ways, for example as an autonomous self-propelled trolley with milking cups 22 (see figures 1, 2 and 4a - 4d) or as a robot arm (see for example figures 5 and 6a - 6c). The various embodiments of the automatic milking system 20 will be described in more detail below.

In the exemplary embodiment shown, the drinking system 16 of the milking stations 10 is the only drinking facility for the cows in the accommodation space 2. In other words, the cows in the accommodation space 2 can only drink from the drinking troughs 17 of the milking stations 10. In order to drink, the cows must visit the milking stations 10. Since the cows 8 must always drink water, the visit frequency to the milking stations 10 is more than sufficient for milking two or three times per day by means of the automatic milking system 20. Thus it is not necessary or scarcely necessary to collect the cows manually for milking. This is a particularly great advantage since, in the prior art, collecting cows which do not voluntarily visit a milking robot, requires manual labor.

Although the cows can only drink in the milking stations 10, at the same time the water intake of the cows necessary for milk production is guaranteed. The number of milking stations 10 according to the invention is relatively great. As indicated above, the accommodation space 2 in this exemplary embodiment is configured to keep a predefined number of 60 milking animals. In the prior art, it is normal to place only one milking robot in such a production group. According to the invention however, six milking stations 10 are provided. With such a number of milking stations, in practice it does not occur or rarely occurs that all milking stations 10 are occupied by cows simultaneously. Even if cows not ready for milking occupy milking stations 10 for drinking without being milked, almost always one or more milking stations 10 remain free in which other cows can drink. Consequently, it is guaranteed that the cows always or almost always have unrestricted access to water.

At the same time, it is economically viable to have a relatively large number of milking stations 10 because the costs per milking station 10 are particularly low, since the relatively costly components of the automatic milking system 20, i.e. the robot device, are shared by the milking stations 10. The robot device is movable relative to the milking stations 10 such that, in each milking station 10, milking cups 22 can be connected automatically by means of the robot device to the teats of a cow 8 present in said milking station 10.

The drinking system 16 of the milking stations 10 is furthermore configured to make water available, in particular in unlimited quantities (ad libitum), for each cow present in one of the milking stations 10, irrespective of whether or not said cow 8 fulfils the milking criterion. In other words, each cow visiting one of the milking stations 10 can drink in said milking station 10, irrespective of whether or not said cow 8 is ready for milking. In this way, the cows are conditioned to associate the milking stations 10 primarily with drinking, and only secondarily with milking. The milking stations 10 form drinking stations for the cows. Consequently, the cows 8 are further encouraged to visit the milking stations 10 voluntarily.

To facilitate the access to water further, the permanently open entry openings 11 of the milking stations 10 can be reached freely and/or unhindered via a walkable connection from the feed fence 4, the concentrate feeding station 6 and from the lying stalls 9 in the accommodation space 2. The accommodation space 2 is configured such that the cows can walk around freely in the accommodation space 2 between the feed fence 4, the lying stalls 9 and each entry opening 11. Totally free cow traffic is possible between the feed fence 4, the lying stalls 9 and the entry openings 11. To drink water, the cows in the accommodation space 2 are able to walk to the drinking system 16 of the milking stations 10 without compulsion and without hindrance.

Therefore with the system according to the invention, not only is it guaranteed that every cow 8 visits the milking stations 10 frequently, whereby no cows or few cows need be collected for milking, but also water is available so easily that the water consumption of the cows is comfortably sufficient for optimum milk production.

Although, in this exemplary embodiment, the drinking system 16 is the only drinking facility for the cows 8 in the accommodation space 2, the system according to the invention may comprise a further drinking facility, for example a drinking trough in the accommodation space 2. The capacity of the further drinking facility is then however selected small enough that, in order to meet their daily water needs, the cows must still visit the milking stations 10.

In this exemplary embodiment, the neck lock device 18 of each milking station 10 (see figures 3a - 3d) comprises two retaining posts 43a, 43b, which are each pivotable about a respective pivot axis A (see also figure 2) which runs substantially in a horizontal plane, obliquely relative to the longitudinal direction of the milking station 10. The pivot axes A of the retaining posts 43a, 43b are for example arranged at a height of 30 cm. The angle between the pivot axis A of each retaining post 43a, 43b and the longitudinal direction of the milking station 10 is around 30° in this exemplary embodiment.

As shown in figures 3a and 3c, in the open state of the neck lock device 18, the retaining posts 43a, 43b define a V-shaped opening. A cow 8 walking into the milking station 10 first pushes its head through the central opening 19 between the fence parts 15a, 15b, and through the V-shaped opening to reach the drinking trough 17. The V-shaped opening is relatively large so that the cow 8 is encouraged to drink from the drinking trough 17. In the locked state shown in figures 3b, 3d, the retaining posts 43a, 43b run substantially vertically. Between them is a retaining opening with a second width *w*₂ which is smaller than the first width *w₁* of the central opening 19 between the fence parts 15a, 15b. The width *w₂* of the retaining opening is such that a cow 8 which pushes its head through the retaining opening cannot then withdraw it.

The width *w*₂ of the retaining opening is for example 195 mm. With such a width *w₂*, a cow 8 locked at the neck cannot withdraw its head fully from the retaining opening, but can still move to some extent in the longitudinal direction of the milking station 10. This freedom of movement is however limited by the fence parts 15a, 15b which form a stop for the shoulders of the cow 8. The cow 8 can only move its neck forward through the retaining opening until the shoulders of its front legs come to lie against the fence parts 15a, 15b. By restricting the freedom of movement of the cow in the milking station 10, the automatic connection of the milking cups 22 to the teats of the cow 8 becomes easier.

The retaining posts 43a, 43b are each connected to one of the fence parts 15a, 15b by means of a hinge arm 44a, 44b. Each hinge arm 44a, 44b consists of two arm parts 45a, 46a and 45b, 46b respectively, which are mutually pivotably connected by means of a hinge 48. As described above, the neck lock device 18 is actively movable by means of the actuator device 40 between the locked state (see figures 3b and 3d) and the open state (see figures 3a and 3c). In this exemplary embodiment, the actuator device 40 of each neck lock device 18 comprises two pneumatic cylinders 42a, 42b for moving the respective retaining posts 43a, 43b. To control the pneumatic cylinders 42a, 42b, these are actively connected to the control system 41.

The pneumatic cylinders 42a, 42b engage one of the arm parts 45a, 45b of the hinge arms 44a, 44b. The other arm parts 46a, 46b each comprise a protruding lip 47 which forms a stop for the locked state. When the pneumatic cylinders 42a, 42b are extended, the retaining posts 43a, 43b move from the open state to the locked state, wherein, because of the obliquely running pivot axes A, the retaining posts 43a, 43b at the same time move slightly forward. When the cow 8 is enclosed, the retaining posts 43a, 43b approach the neck of the cow 8 not only from the side but also to some extent from the rear, so that the cow 8 does not or scarcely perceives the movement of the retaining posts 43a, 43b, even from the corner of its eye. This helps keep the cow 8 quiet during application of the neck lock.

The pneumatic cylinders 42a, 42b push the arm parts 45a, 45b through a dead point until the lips 47 of the arm parts 46a, 46b come to lie against the arm parts 45a, 45b. The retaining posts 43a, 43b have then reached the locked state. The pneumatic cylinders 42a, 42b need not be dimensioned to absorb, in the locked state, forces which the cow 8 may exert to free itself from the neck lock. Such forces are dissipated mechanically via the hinge arms 44a, 44b. To open the neck lock 18, the retaining posts 43a, 43b are retracted again through the dead point by the pneumatic cylinders 42a, 42b.

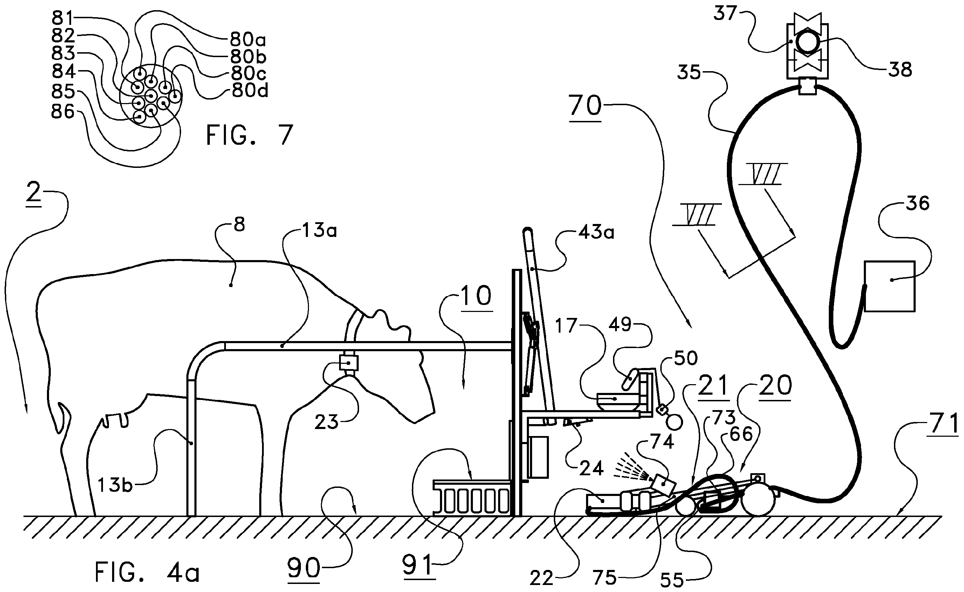

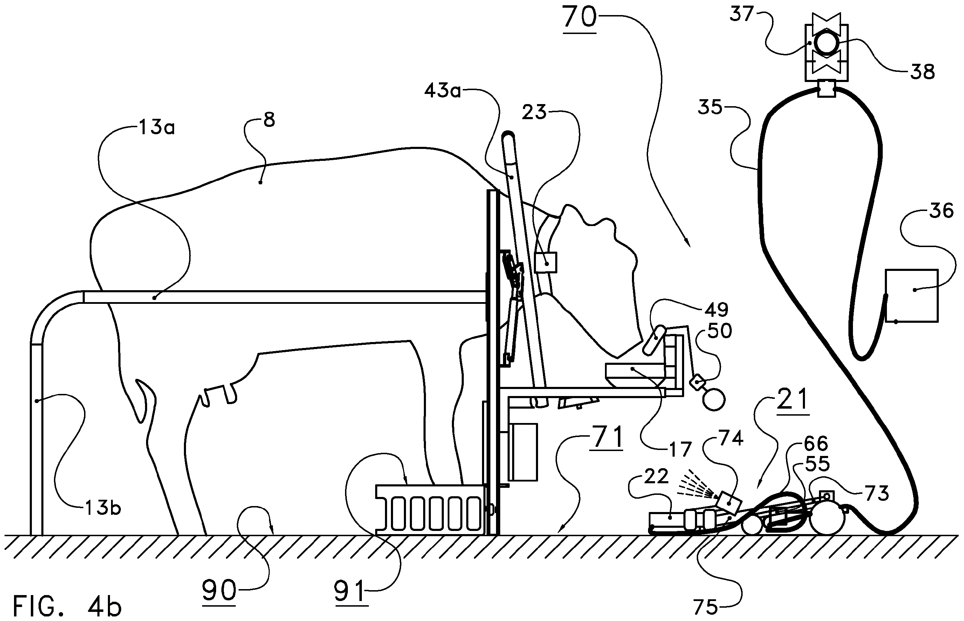

As described above, the drinking troughs 17 of the drinking system 16 are configured to provide water for the cows 8. In this exemplary embodiment, each drinking trough 17 is provided with a flap or tongue 49, known in itself and operated by the cow, which forms a supply valve. The flap 49 is pretensioned in a closed state. When a cow 8 presses its nose against the flap 49, the flap 49 is moved to an open state and water flows into the drinking trough 17. A sensor 50, for example a flow meter, is provided in the supply line to the drinking trough 17 (see figures 4a - 4d). The sensor 50 is actively connected to the control system 41. On the basis of the sensor 50, it is perceived when the cow 8 presses its nose against the flap 49. The sensor 50 forms a detection means for detecting whether the cow 8 in a milking station 10 has pushed its head into the drinking trough 17 of said milking station 10. The detection means may however also be configured differently, for example with a sensor for detecting whether a light beam is interrupted. It is also possible that the detection means is configured to detect whether the cow in a milking station 10 has brought its head above the drinking trough 17, instead of in the drinking trough 17.

In this exemplary embodiment, the sensor 50 configured as a flow meter measures the quantity of water supplied to each drinking trough 17. On the basis of the quantity of water supplied, the control system 41 can deduce how much water the cows 8 have drunk during a visit to the milking station 10. Therefore the water consumption and drinking behavior of the cows 8 can be monitored individually.

A cow 8 which visits the milking station 10 to drink water from the drinking trough 17 pushes its head through the V-shaped opening between the retaining posts 43a, 43b. The transponder 23 in the collar of the cow 8 is read by the readout unit 24 of said milking station 10, so that the cow 8 is identified. Although the readout unit 24 can indeed identify the cow 8 by means of the transponder 23, it cannot be accurately established whether the cow 8 is in the correct position and/or attitude for locking at the neck in the milking station 10. The correct position and/or attitude in the milking station 10 can however be established using the sensor 50. When, after identification by the transponder 23, the cow 8 operates the flap 49 of the drinking trough 17 with its nose, the control system 41 via the sensor 50 establishes that the head of the cow 8 is in the drinking trough 17 and the cow 8 therefore has a position and/or attitude in the milking station 10 which is suitable for locking the cow 8 at the neck by means of the neck lock device 18 of said milking station 10.

When the control system 41 has established that the cow 8 in the milking station 10 has a position and attitude which is suitable for locking said cow 8 at the neck, the control system 41 controls the actuator device 40 of said milking station 10 such that the cow 8 is locked at the neck. The control system 41 for controlling the pneumatic cylinders 42a, 42b is configured and programmed such that the retaining posts 43a, 43b are only moved from the open state to the locked state if the readout unit 24 has identified the transponder of the cow 8 and established, on the basis of the sensor 50, that the cow 8 is pressing its nose against the flap of the drinking trough 17, i.e. the cow 8 is in the position and attitude in the milking station 10 in which the cow 8 can be reliably enclosed between the retaining posts 43a, 43b. In other words, the control system 41 makes use of the combination of the data from the transponder 23/readout unit 24 and the sensor 50 to determine whether the cow 8 in the milking station 10 has the position and attitude suitable for the neck lock.

On readout of the transponder 23 of a cow 8, the control system 41 furthermore determines whether or not the identified cow 8 fulfils the milking criterion, i.e. is/is not ready for milking. According to the invention however, these data are not used to operate the retaining posts 43a, 43b from the open state to the locked state. According to the invention, locking the cow 8 at the neck is not dependent on whether the cow 8 fulfils the milking criterion. It is not relevant whether the cow 8 is ready for milking or not: both a cow ready for milking and a cow not ready for milking are locked by the retaining posts 43a, 43b of the neck lock device 18. The control system 41 is programmed such that all cows 8 which, on a visit to the milking station 10, assume the position and attitude suitable for the neck lock in the milking station 10, are locked at the neck by means of the neck lock device 18. Each cow 8 which walks into a milking station 10 and then operates the flap 49 of the drinking trough 17 with its nose, is according to the invention then secured at the neck by the retaining posts 43a, 43b.

Because the cows 8 are always locked at the neck when, after walking into a milking station 10, the cows 8 begin to drink from the drinking trough 17, the cows 8 rapidly become accustomed to the neck lock 18. Consequently, the cows 8 stand quietly in the milking station 10 when the cows 8 are held at the neck. This is favorable for calmness in the herd, and furthermore has the particularly great advantage that the milking system 20 can easily and quickly automatically connect the milking cups 22 in the case that the cow 8 is ready for milking.

If the cow 8 locked at the neck is not ready for milking, this cow 8 need not be milked. After locking at the neck, the cow 8 may be released again almost immediately. The control system 41 is configured to release every cow 8 not ready for milking after a predefined period, calculated from the time at which the cow 8 is locked at the neck. The predefined period in this exemplary embodiment is around 15 seconds, but may be longer or shorter of course.

If the cow 8 locked at the neck is ready for milking, the control system 41 sends a signal to the milking system 20 to milk said cow 8. The control system 41 is programmed such that the neck lock device 18 remains locked until the milking of the cow 8 is completed. Only when the milking cups have been disconnected is the neck lock device operated by the control system 41 from the locked state to the open state, to release the cow 8. It is preferred that the neck lock device 18 is opened only around 5-30 minutes after disconnection of the milking cups 22. During this period, the teat openings of the milked cow 8 can recover.

As described above, in this exemplary embodiment, the entry openings 11 of the milking stations 10 are permanently accessible for the milking animals 10. The feature of always locking the cows 8 at the neck however may also be used in a system with milking stations which for example comprise an access gate (not shown). In this case, the system according to the invention is preferably configured such that the entry opening 11 of each milking station 10 which is not occupied by milking animal, is left open to allow a cow 8 into the milking station 10, irrespective of whether the cow 8 fulfils the milking criterion. In other words, if the entry openings 11 of the milking stations 10 can be closed by an access gate (not shown), the access gates are operated by the control system 41 so that each access gate of an unoccupied milking station 10 remains open. Every cow 8, irrespective of whether or not the cow complies with the milking criterion, can walk into the free milking station 10.

In the exemplary embodiment shown in figures 1, 2 and 4a - 4d, the robot device of the automatic milking system 20 is configured as an autonomous self-propelled trolley 21 for connection of the milking cups 22, wherein the trolley 21 is connected to the fixed world by means of a flexible connecting string 5 containing one or more pipes or lines.

The trolley 21 is connected by means of the flexible connecting string 35 to a coupling device 36 which is arranged at a fixed location in the animal-free space 70, for example on a wall of the barn, i.e. the connecting string 35 is connected at one end to the trolley 21 and at the other end to the coupling device 36. The coupling device 36 comprises a first connector device, while the flexible connecting string 35, at the end facing away from the trolley 21, is provided with a second connector device which can be releasably connected to the first connector device. When the first and second connector devices are coupled together, the different pipes or lines of the connecting string 35 are connected. This will be explained in more detail below.

The connecting string 35 is configured such that the trolley 21 can travel over the floor 71 of the animal-free space 70 into each of the milking stations 10, while the trolley 21 remains connected to the coupling device 36 by means of the connecting string 35. For example, the length and stiffness of the connecting string 35 are adapted such that the trolley 21 can travel into each milking station 10, up to below the teats of a cow 8. In this exemplary embodiment, the connecting string 35 is guided in the animal-free space 70 through an eye of a string guide 37 which is movably suspended on a guide rail 38. In this way, the connecting string 35 does not obstruct the trolley 21 in its travel over the floor 71. Such a string guide is however optional.

Although the connecting string 35 in figures 4a - 4d is indicated diagrammatically by a single solid line, the connecting string 35 in this exemplary embodiment comprises several pipes or lines, as indicated diagrammatically in figure 7. The various pipes or lines of the connecting string 35 are described below.

The connecting string 35 comprises four milk lines 80a, 80b, 80c, 80d. The four milking cups 22, known in themselves, of the trolley 21 each comprise a teat space and a pulsation space (not shown). In this exemplary embodiment, each milking cup 22 is connected by means of a double-channel hose 66 to a coupling piece 55 which is attached to the trolley 21. Each double-channel hose 66 comprises two channels (not shown). The one channel of the double-channel hose 66 is a milk-carrying channel which discharges a mixture of milk and air from the milking cup 22, while the other channel of the double-channel hose 66 forms a vacuum channel for application of a pulsating vacuum to the teat space of the milking cup 22. The vacuum channel is connected via the coupling piece 55 to a pulsator (not shown), which is attached to the trolley 21.

The four milk lines 80a, 80b, 80c, 80d of the connecting string 35 are connected at one end via the coupling piece 55 to the respective milk-carrying channels of the double-channel hoses 66. At the other end, the milk lines 80a, 80b, 80c, 80d are connected to the coupling device 36. The four milk lines 80a, 80b, 80c, 80d are each connected, via the mutually coupled first and second connector devices of the coupling device 36 and the connecting string 35 respectively, fluid-tightly and/or air-tightly to four milk-carrying lines 57a, 57b, 57c, 57d which are connected to a milk/air separator 33 for separating milk and air (see figure 2). The milk/air separator 33 is formed for example by a milk jar known in itself. The milk/air separator 33 is fixedly arranged in the animal-free space 70.

The milk/air separator 33 is in fluid connection via a milk transport line 34 with a milk storage tank 25 for the cooled storage of milk. The milk storage tank 25 is fixedly placed outside the accommodation space 2, for example in the animal-free space 70 or elsewhere. The milk transport line 34 comprises a milk pump 32 which transports milk from the milk/air separator 33 to the milk storage tank 25. Between the milk pump 32 and the milk storage tank 25, the milk transport line 34 comprises a three-way valve 27 for separating pre-milk and/or milk which is unsuitable for human consumption.

The connecting string 35 furthermore comprises a flexible vacuum line 81 which is in fluid connection with the pulsator attached to the trolley 21. The flexible vacuum line 81 connects the pulsator of the trolley 21 to the coupling device 36. The flexible vacuum line 81 is connected, via the mutually coupled first and second connector devices of the coupling device 36 and the connecting string 35 respectively, air-tightly to a vacuum line 59 which leads to a vacuum source 26. The vacuum source 26 is placed at a fixed location in the animal-free space 70. The vacuum source 26 is for example configured as a vacuum pump, known in itself, with rotation speed control. The vacuum source 26 is furthermore connected by means of a vacuum line 58 to the milk/air separator 33.

In addition, the connecting string 35 comprises a flexible power supply line 85. The power supply line 85 forms part of an electrical connection between the trolley 21 and an electrical power source 31, for example a high-voltage current source. The trolley 21 comprises several electric motors. For example, the trolley 21 in this exemplary embodiment has a drive and steering system for driving and steering the trolley 21. The trolley 21 has two tracks 73, and for each track 73 a respective electric motor is arranged on the trolley 21 (not shown). In addition, the trolley 21 comprises electric motors for moving the milking cups 22 relative to the trolley 21 so that the milking cups 22 can be connected automatically to the teats of a cow 8. For teat detection, the trolley 35 furthermore comprises a camera 74, in particular for producing three-dimensional images. Instead of the camera 74, other teat detection means may also be used. The electric motors and the camera 74 on the trolley 35 are supplied with electrical energy which is supplied via the flexible power supply line 85. At the coupling device 36, the power supply line 85 is connected to a supply cable 64, for example by means of plugs. The trolley 21 in this exemplary embodiment requires no electrical accumulators.

The connecting string 35 furthermore comprises a flexible water line 82, for example a water hose, which is connected at one end to the trolley 21. On the trolley 21, water is used for example to rinse the milking cups 22 after milking. The water line 82 is in fluid connection with the milking cups 22 on the trolley 35 (not shown). At the other end, the water line 82 is connected, via the mutually connected connector devices of the connecting string 35 and the coupling device 36, fluid-tightly to a water supply line 62 which is connected to a water connection 29. The water connection 29 is formed for example by a tap connected to the water mains.

The connecting string 35 is furthermore provided with a flexible compressed air line 83. Compressed air is used for example on the trolley 21 to blow clean a lens of the camera 74 or the milking cups 22 of the trolley 21. The compressed air line 82 is connected at one end to the trolley 21, for example in fluid connection with a nozzle provided on the trolley 21 (not shown). At the other end, the compressed air line 82 is connected, via the mutually connected connector devices of the connecting string 35 and coupling device 36, air-tightly to a compressed air line 61 which is connected to a compressed air source 28.

The connecting string 35 has a flexible data line 86, for example an ethernet cable, which is connected at one end to a control unit arranged on the trolley 21 (not shown). The data line 86 is connected via the control unit of the trolley 21 to the camera 74 of the trolley 35. In this exemplary embodiment, the image signal from the camera 74 is transmitted by the control unit of the trolley 35, via the data line 86, the connected connector devices of the connecting string 35 and of the coupling device 36, and a data cable 65, to the control system 41. On the basis of the image signal of the camera 74, the control system 41 can determine the position of the teats of a cow 8. Via the hard-wired data connection 65, 86, control signals can furthermore be sent by the control system 41 to the control unit on the trolley 21. The drive and steering system of the trolley 21 is controlled depending on the control signals. Data are sent from the trolley 21 to the control system 41 and vice versa via the hard-wired data connection.

In this exemplary embodiment, the connecting string 35 comprises a flexible fluid line 84 for disinfectant fluid, which is in fluid connection with a spray device arranged on the trolley 21 for spraying disinfectant fluid onto the teats of a cow 8. The fluid line 84 for disinfectant fluid is connected in the same manner as described above, via the coupling device 36 and an associated line 63, to a holder 30 for disinfectant. The sprayer device is aimed for example at one or more brushes for pretreatment of the teats of a cow 8 which must be milked. Instead of pretreatment with brushes, the trolley 21 may contain a pretreatment cup for pretreatment of the teats. In this case, the fluid line 84 is connected to the pretreatment cup of the trolley 21.

Also, one or more of the pipes or lines described above of the connecting string 35 may be omitted. For example, the trolley 21 comprises a holder for disinfectant, so that disinfectant need not be supplied to the trolley 21 and the fluid line 84 is not required. In addition to the pipes or lines described above, the connecting string 35 may also comprise other pipes or lines and/or cables.

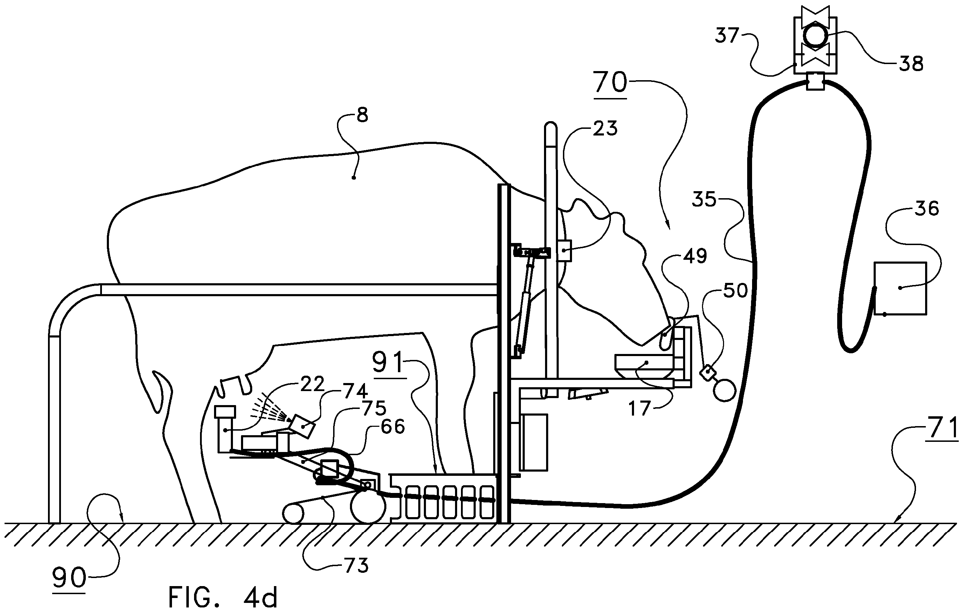

The milking cups 22 of the trolley 21 are arranged on a robot arm 75 which is movable between a lowered state (see figures 4a - 4c) and a raised state (see figure 4d). In this exemplary embodiment, the robot arm 75 is connected to a chassis of the trolley 21, pivotably between the lowered state and the raised state. The robot arm 75 can be driven by means of an electric drive motor (not shown) which is actively connected with the control system 41. The milking cups 22 of the trolley 35 are tiltable relative to the robot arm 75 between a retracted state (see figures 4a - c) and an erected state (see figure 4d). In the retracted state, the milking cups 22 lie substantially horizontally, with the openings of the milking cups 22 opposite the direction of travel of the trolley 21, while in the erected state the milking cups 22 are tilted upward, for example extending substantially vertically upward. In this exemplary embodiment, the milking cups 22 are pretensioned in the erected state, for example by means of a spring means, and the trolley 21 comprises a tilt drive for tilting the milking cups 22 from the erected state to the retracted state (not shown). The tilt drive comprises an electric drive motor (not shown). The tilt drive is actively connected to the control system 41.

As shown most clearly in figures 4a - 4d, the milking stations 10 each comprise a floor with a first floor part 90 and a second floor part 91 which is raised relative to the first floor part 90. The first floor part 90 is connected below the second floor part 91 to the floor 71 of the animal-free space 70. In this exemplary embodiment, the floor 71 of the animal-free space 70 and the first floor part 90 form a cohesive floor. The trolley 21 can travel over the flat floor 71 of the animal-free space 70, under the second floor part 91, onto the first floor part 90 of each milking station 10.

The raised second floor part 91 is arranged for example 20 cm higher than the first floor part 90. Such a raised position corresponds in principle to the normal height difference between a lying stall and the floor in a barn. The length of the second floor part 91, viewed in the longitudinal direction of each milking station 10, is such that when a cow 8 stands in the milking station 10 with its front legs on the second floor part 91, the rear legs of said cow 8 stand on the first floor part 90. The length of the second floor part in this exemplary embodiment is 50 cm. A cow 8 in a milking station 10 can only drink from the drinking trough 17 of said milking station if the cow 8 stands with its front legs on the second floor part 91. When the cow 8 stands with its front legs on the second floor part 91, the cow 8 has a position and/or attitude which is suitable for connecting the milking cups 22 of the trolley 21 to the teats of said cow 8.

When a cow 8 visits one of the milking stations 10 to drink from the drinking trough 17 and said cow 8 is ready for milking, the control system 41 controls the trolley 21 so that the trolley 21 travels automatically over the floor 71 of the animal-free space 70, onto the first floor part 90 of said milk station 10, to under the teats of said cow 8. Since only a restricted height is available under the second floor part 91, the trolley 35 with erected milking cups 22 is unable to travel below the second floor part 91, even if the robot arm 75 is lowered.

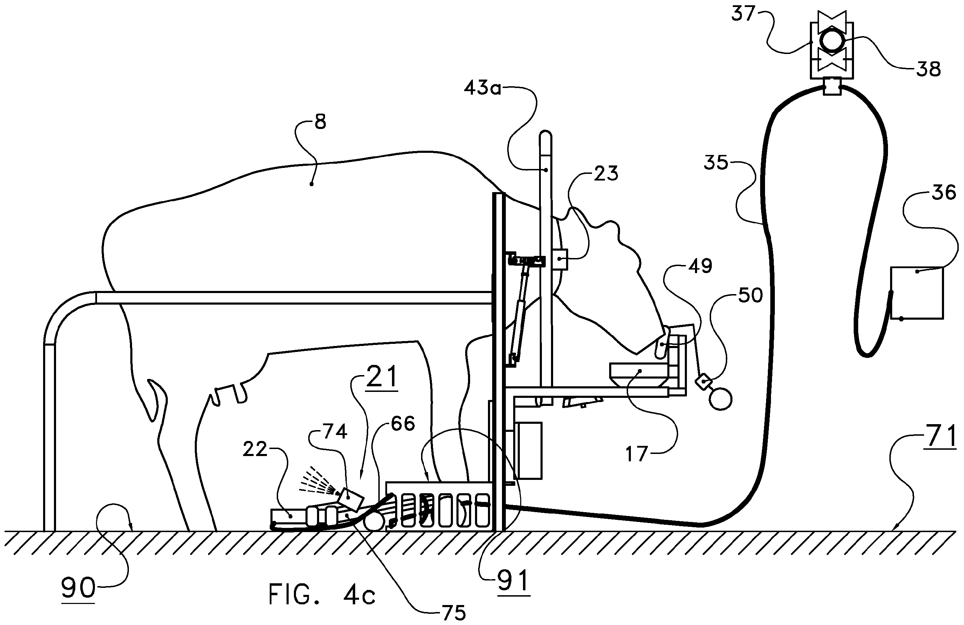

To enable the trolley 21 to travel from the floor 71 of the animal-free space 70, under the fence 14 and the second floor part 91, the milking cups 22 of the trolley 21, with the robot arm 75 in the lowered state, are tilted down into the retracted state. The trolley 21 then fits under the second floor part 91 (see figure 4c). After the trolley 21 has passed under the second floor part 91, the control system 41 controls the electric drive motor of the robot arm 75 to bring this into the raised state, and the tilt drive to move the milking cups 22 to the erected state. Then the milking cups 22 are connected automatically to the teats of the cow 8 on the basis of control signals from the control system 41. The trolley 21 can be moved inside the milking station 10 and/or the robot arm 75 can be controlled relative to the trolley 21 to connect the milking cups 22 automatically to the teats of a cow 8 in the milking station 10.

During travel over the floor 71 of the animal-free space 70, and up to the first floor part 90 of the milking station 10, the trolley 21 remains connected to the coupling device 36 by means of the flexible connecting string 35. Since the pipes or lines of the connecting string 35 are used to discharge the milk, to supply a vacuum, water, compressed air and disinfectant, and to exchange data, the trolley 21 can be configured particularly light and compact.

Also, in an embodiment not shown, according to the invention it is possible that milk and air discharged from the milking cups 22 are separated from each other on the trolley 21. For example, the milking cups 22 are each connected to a milk/air separator which is arranged on the trolley 21. The milk/air separator of the trolley 21 has a milk discharge opening which is in fluid connection with a milk pump arranged on the trolley 21. The milk pump is connected to a single flexible milk line which extends through the connecting string 35 to the coupling device 36. Only milk flows through the flexible milk line of the connecting string 35. Only one milk line is required for transporting the milk. The milk is discharged from the coupling device 36 to the milk storage tank 25 as described above. Since the milk pump in this case is arranged on the trolley 21, the milk can be transported from the trolley 21 to the milk storage tank 25 particularly efficiently.

In a further embodiment (not shown), according to the invention, the system comprises two or more autonomous self-propelled trolleys. For example, a second trolley contains a device for pretreatment and/or post-treatment of the teats of a cow 8 in a milking station 10. The second trolley can pretreat, for example clean, disinfect and/or stimulate, the teats of the cow 8 in a milking station 10, before the first trolley 21 automatically connects the milking cups 22 to the teats. In addition or alternatively, the second trolley may be configured to post-treat the teats of the milk cow 8, i.e. after the first trolley 21 has milked the cow 8 and travelled away, the second trolley travels under the milk cow 8 for post-treatment. Therefore firstly the pretreatment and/or post-treatment, and secondly the milking, are carried out by different trolleys. Also, a second trolley may be configured in the same way as the first trolley.

An alternative embodiment of the system is shown in figures 5, 6a - 6c. The same or similar components carry the same reference numerals. In this case, the system comprises a telescopic robot arm 100. The telescopic robot arm 100 comprises several arm parts 101a, 101b, 101c, 101d which are telescopically connected to each other. By extending and retracting the arm parts 101a, 101b, 101c, 101d, the robot arm 100 can be moved in the longitudinal direction of the milking station 10. The first arm part 101a of the robot arm 100 is fixed to an arm guide 105 which is connected to a fixed supporting structure. In this exemplary embodiment, the supporting structure comprises a guide rail 106 connected to the floor 71 of the animal-free space 70. The arm guide 105 with the robot arm 100 attached thereto is guided movably over the guide rail 106 by means of rollers, in the transverse direction of the milking stations 10. The function of the robot arm 100 is furthermore substantially the same as that of the trolley 21 described above, and will not therefore be explained further. It is also possible that the flexible connecting string 35 on the robot arm 100 is configured differently, for example is replaced by pipes, lines and/or cables which are arranged on the robot arm 100.

Although the guide rail 106 in this exemplary embodiment is attached to the floor 71 of the animal-free space 70, the guide rail 106 for the arm guide 105 may also be suspended. The robot arm 100 may furthermore, instead of a telescopic arm, also be configured as a robot arm with several arm parts connected pivotably relative to each other (not shown). Instead of a robot arm 100 which can perform a rectilinear movement transversely relative to the milking stations 10, according to the invention it is also possible that the robot arm is connected to a fixed supporting structure about a substantially vertical pivot axis, for example by means of a ball joint. In this case, the milking stations may be placed around the pivot axis, i.e. the milking stations then lie laterally next to each other in an arc, such that the milking stations are oriented with their head sides substantially towards the pivot axis. By pivoting the robot arm, the robot arm can be aligned with each of the milking stations so that the robot arm can connect milking cups in each milking station. Such robot arms for connection of milking cups 22 may be designed and produced using techniques known in themselves in practice.

The robot arm 100 shown in figures 5, 6a - 6c is provided with milking cups 22. The milking cups 22 are arranged on the robot arm 100. During operation, the robot arm 100 connects the milking cups 22 one by one to the teats of a cow 8. It is however also possible that the milking system 20 is provided with a milking cup holder (not shown), configured for holding the milking cups 22 which are not being used. The robot arm 100 in this case comprises a gripper member (not shown), which is configured to take at least one milking cup 22 from the milking cup holder and connect this to a teat of a cow 8. During operation, the robot arm 100 takes a first milking cup 22 from the milking cup holder and connects said milking cup to a teat, then the robot arm 100 takes a second milking cup 22 from the milking cup holder, and so on. Also, such a robot arm can be produced using techniques known in themselves in practice. The milking cup holder with a set of milking cups 22 may be arranged in the animal-free space 70, or such a milking cup holder with a set of milking cups 22 may be arranged in each milking station 10. With such a robot arm 100, each milking station 10 may comprise a set of milking cups 22. The milking cups 22 are for example arranged in sets in the animal-free space 70 in front of each milking station 10 or in each milking station 10, for example close to the teats of a cow 8. It is also possible that a common set of milking cups 22 is shared by several milking stations 10. The milking cups 22 are then used successively in several milking stations 10.

After a cow 8 has been milked, in the exemplary embodiments described above, said cow 8 may remain in the milking station until the cow 8 voluntarily leaves the milking station, unless the cow 8 complies with a predefined expulsion criterion and all milking stations 10 are occupied by other cows. As indicated diagrammatically in the figures, each milking station 10 comprises an expulsion means 110 for driving a cow 8 out of the milking station 10. The expulsion means 110 may be activated, in each of the milking stations 10, to give an expulsion stimulus to a milking animal present in the milking station 10, to encourage it to leave the milking station 10. The expulsion means 110 may be configured in various ways, for example for administering an electric shock to a cow 8 in the milking station 10. Alternatively or additionally, the expulsion means 110 may be configured to give a cow 8 an expulsion stimulus in the form for example of a light signal, an audible signal or a contact signal, such as by means of a water-jet, an air pulse, or a mechanical push or contact element. Also, according to the invention it is possible that the expulsion means are movable relative to the milking stations 10, such that an expulsion stimulus can be given in each milking station 10 to a cow 8 present in said milking station 10 (not shown). Furthermore, according to the invention it is possible that the system 1, instead of or in addition to the expulsion means 110, has an attraction means and/or other motivation means for giving a stimulus in order to entice the cows 8 to leave the milking stations, for example by means of feed concentrate.

To be able to activate the expulsion means, the expulsion means 110 are each actively connected to the control system 41. The control system 41 controls the expulsion means 110 such that the expulsion means 110 are only activated if two conditions are fulfilled: (i) a cow 8 in one of the milking stations 10 fulfils the predefined expulsion criterion, and (ii) all milking stations 10 are occupied. The expulsion criterion may comprise different parameters. For example, the expulsion criterion is dependent on the milking criterion, such as whether the cow 8 fulfils the milking criterion or fulfils the milking criterion within a predefined period, and/or the visit behavior of the cow 8, such as the expected time between two successive visits of the cow 8 to the milking stations, and/or the drinking behavior of the cow 8, such as the water intake, i.e. how much the cow 8 drinks from the drinking trough, and/or other parameters. The expulsion criterion may furthermore be determined individually for each individual cow 8 in the accommodation space 2. Also with a cow-dependent milking criterion however, an expulsion criterion may be used which is the same for all cows 8 in the accommodation space 2.

As described above, the number of milking stations 10 according to the invention is selected such that it does not occur or rarely occurs that all milking stations 10 are occupied simultaneously, i.e. during operation, almost always one or more milking stations 10 are free. Since a cow 8 is only expelled from the milking station if condition (ii) is fulfilled, i.e. all the milking stations are occupied, a cow 8 is driven out only in very exceptional cases. This has a positive effect on the extent to which the cows 8 voluntarily visit the milking stations 10. The system according to the invention is configured to allow every cow 8 visiting a milking station 10 to remain there in principle until said cow 8 voluntarily leaves the milking station. The milking animals are only subjected to expulsion stimuli, which are perceived by the cows 8 as uncomfortable, in the exceptional circumstance that all milking stations 10 are occupied. In addition, the control system 41 also determines whether the cow 8 to be driven out complies with the predefined expulsion criterion.

Instead of driving out cows by means of the expulsion means 110 only in very exceptional circumstances, according to the invention it is also possible to allow the cows always to remain in the milking stations until the cows voluntarily leave the milking stations. In this case, no expulsion means 110 are required, i.e. the expulsion means 110 are omitted in this embodiment (not shown). None of the milking stations 10 comprises expulsion means. Also, the system does not comprise any attraction means or other motivation means for encouraging the cows 8 to leave the milking stations. The cows 8 may remain in the milking stations 10 until the cows 8 voluntarily leave the milking stations 10. As described above, the cows 8 have access to the milking stations 10 irrespective of whether or not the cows 8 fulfil the milking criterion, i.e. irrespective of whether the cows 8 must be milked. Both cows 8 which have been milked, and cows 8 which visit the milking stations 10 to drink without needing to be milked, may remain in the milking stations 10. In this case, it cannot be completely excluded that all milking stations 10 are occupied at some time by the cows 8. If all milking stations 10 are occupied, a cow 8 from the accommodation space 2 which wishes to drink, must wait until one of the cows 8 voluntarily leaves the milking station 10. As explained above, the number of milking stations 10 is however sufficiently great, relative to the number of cows 8 contained in the accommodation space 2, that the risk is minimal that all milking stations 10 will remain occupied simultaneously for an unacceptable period.

The invention is not restricted to the exemplary embodiments shown in the drawing. The person skilled in the art may make various adaptations which lie within the scope of the invention as defined by the appended claims. In particular, according to the invention, the drinking system with drinking troughs 17 may be replaced by a feed and drinking system for providing feed and water for the milking animals. The feed and drinking system comprises for example a feed and drinking trough for each milking station. The milking animals then visit the milking stations to eat and drink. Furthermore, according to the invention, it is possible that the system, instead of the neck lock device described in the description and claims, comprises another holding device for securing and/or holding a milking animal in a milking station. For example, each milking station has a holding device which can be operated by means of an actuator device between a holding state, in which a milking animal present in said milking station is held by the holding device, and a free state, in which a milking animal present in said milking station is free to leave said milking station. Such a holding device for example comprises a door or gate to enclose a milking animal in a milking station, such as in a generally known milking stall.

## Claims

1. A system for milking a group of milking animals (8), in particular cows, wherein the system comprises:
- an accommodation space (2) for the milking animals (8),
- a plurality of milking stations (10) each arranged at a fixed position and next to each other, wherein the milking stations (10) each comprise an entry opening (11) for entry of a milking animal (8) from the accommodation space (2) to the milking station (10),
- an automatic milking system (20) for automatic milking of milking animals (8) present in the milking stations (10),
- a drinking system (16) which is configured to provide water for the milking animals (8),
**characterized in that**
the milking stations (10) comprise the drinking system (16), and the drinking system (16) of the milking stations (10) is the only drinking facility for the milking animals (8) in the accommodation space (2) where the milking animals (8) can meet their daily water needs, and
the accommodation space (2) is configured such that the milking animals (8) in the accommodation space (2) can walk freely from the accommodation space (2) to each entry opening (11).

2. The system as claimed in claim 1, wherein each of the entry openings (11) of the milking stations (10) is permanently open.

3. The system as claimed in any of the preceding claims, wherein the milking stations (10) comprise at least three milking stations (10), preferably at least six milking stations (10).

4. The system as claimed in any of the preceding claims, wherein the accommodation space (2) is configured to keep a predefined number of milking animals (8), and wherein the number of milking stations (10) is adapted to the predefined number of milking animals (8) such that the system comprises at least one milking station (10) for every 20 milking animals, preferably at least one milking station (10) for every 15 milking animals, even more preferably at least one milking station (10) for every 10 milking animals.

5. The system as claimed in any of the preceding claims, wherein the milking system (20) is configured to milk a milking animal (8) in a milking station (10) automatically on condition that said milking animal (8) fulfils a predefined milking criterion, and wherein the drinking system (16) of the milking stations (10) is configured to supply water to each milking animal (8) present in one of the milking stations (10) irrespective of whether said milking animal (8) fulfils the milking criterion.

6. The system as claimed in any of the preceding claims, wherein the milking system (20) comprises milking cups (22) and a robot device (21) which is movable relative to the milking stations (10) such that, in each milking station (10), milking cups (22) can be connected automatically by means of the robot device (21) to the teats of a milking animal (8) present in said milking station (10).

7. The system as claimed in any of the preceding claims, wherein the accommodation space (2) has a feed area (6) for feeding the milking animals (8) and a rest area (7) for resting the milking animals (8), wherein the accommodation space (2) is configured such that the milking animals (10) in the accommodation space (2) can walk freely around between the feed area (6) and the rest area (7), and wherein the accommodation space (2) is configured such that the milking animals (8) in the accommodation space can walk freely from the feed area (6) and from the rest area (7) to each entry opening (11).

8. The system as claimed in any of the preceding claims, wherein each milking station (10) is configured such that a milking animal (8) which has walked forward into the milking station (10) through the entry opening (11) thereof can leave said milking station (10) via the entry opening (11) by walking backward.

9. The system as claimed in claim 1, wherein the drinking system (16) of the milking stations (10) is configured to provide water in unlimited quantities (ad libitum) for each milking animal (8) which visits one of the milking stations (10).

10. The system as claimed in any of the preceding claims, wherein the drinking system (16) of the milking stations (10) comprises at least one drinking trough (17) arranged at the head ends of the milking stations (10) lying opposite the entry openings (11), and wherein each milking station (10) comprises a neck lock device (18) which is provided with an actuator device (40) and can be moved by said actuator device (40) between a locked state in which a milking animal (8), which is situated with its head above or in the drinking trough (17) of said milking station (10), can be locked at the neck by the neck lock device (18), and a free state in which a milking animal (8) present in said milking station (10) is free to move its head in and/or out of the neck lock device (18).

11. The system as claimed in claim 10, wherein the at least one drinking trough (17) is positioned relative to the neck lock device (18) of each milking station (10) such that a milking animal (8) present in one of the milking stations (10) must push its head and/or neck through the neck lock device (18) of said milking station (10) in order to drink water from the drinking trough (17).

12. The system as claimed in claim 10 or 11, wherein the milking stations (10), at the head ends thereof lying opposite the entry openings (11), are delimited by a fixed drinking fence (14), on which the neck lock devices (18) of the milking stations (10) are arranged, and wherein the at least one drinking trough (17) is positioned along the drinking fence (14) such that a milking animal (8) present in one of the milking stations (10) must push its head and/or neck through the drinking fence (14) in order to drink water from the drinking trough (17).

13. The system as claimed in any of claims 10-12, wherein the drinking system (16) of the milking stations (10) comprises a plurality of separate drinking troughs (17), wherein each milking station (10) comprises one of said drinking troughs (17).

14. The system as claimed in claim 13, wherein the drinking system (16) is provided with a supply device for the supply of water to each of the drinking troughs (17), and wherein the supply device is configured for determining the respective quantity of water supplied to each of the drinking troughs (17) by the supply device.

15. The system as claimed in any of the preceding claims, wherein the system is provided with an animal identification system (23, 24) for identifying each milking animal (8) present in one of the milking stations (10).

16. A method for milking a group of milking animals (8), in particular cows, in a system (1) as claimed in one or more of the preceding claims, and wherein the method comprises:
- the provision of water by means of the drinking system (16) to each milking animal (8) which visits one of the milking stations (10),
- the milking of each milking animal (8) which visits one of the milking stations (10), on condition that said milking animal (10) fulfils a predefined milking criterion.

## Patentansprüche

1. System zum Melken einer Gruppe von Milchtieren (8), insbesondere Kühen, wobei das System umfasst:
- einen Unterbringungsraum (2) für die Milchtiere (8),
- eine Mehrzahl von Melkstationen (10), die jeweils an einer festen Position und nebeneinander angeordnet sind, wobei die Melkstationen (10) jeweils eine Eintrittsöffnung (11) zum Eintreten eines Milchtiers (8) aus dem Unterbringungsraum (2) in die Melkstation (10) umfasst,
- ein automatisches Melksystem (20) zum automatischen Melken der in den Melkstationen (10) anwesenden Milchtiere (8),
- ein Tränkensystem (16), das ausgestaltet ist, Wasser für die Milchtiere (8) bereitzustellen,
**dadurch gekennzeichnet, dass**
die Melkstationen (10) das Tränkensystem (16) umfassen, und das Tränkensystem (16) der Melkstationen (10) die einzige Tränkeinrichtung für die Milchtiere (8) in dem Unterbringungsraum (2) ist, wo die Milchtiere (8) ihren täglichen Wasserbedarf stillen können, und
der Unterbringungsraum (2) derart ausgestaltet ist, dass die Milchtiere (8) in dem Unterbringungsraum (2) frei von dem Unterbringungsraum (2) zu jeder Eintrittsöffnung (11) laufen können.

2. System nach Anspruch 1, wobei jede der Eintrittsöffnungen (11) der Melkstationen (10) dauerhaft geöffnet ist.

3. System nach einem der vorhergehenden Ansprüche, wobei die Melkstationen (10) mindestens drei Melkstationen (10), vorzugsweise mindestens sechs Melkstationen (10) umfassen.

4. System nach einem der vorhergehenden Ansprüche, wobei der Unterbringungsraum (2) ausgestaltet ist, eine vordefinierte Anzahl an Milchtieren (8) zu fassen, und wobei die Anzahl an Melkstationen (10) derart auf die vordefinierte Anzahl an Milchtieren (8) ausgelegt ist, dass das System mindestens eine Melkstation (10) pro 20 Milchtiere, vorzugsweise mindestens eine Melkstation (10) pro 15 Milchtiere, noch weiter bevorzugt mindestens eine Melkstation (10) pro 10 Milchtiere, umfasst.

5. System nach einem der vorhergehenden Ansprüche, wobei das Melksystem (20) ausgestaltet ist, ein Milchtier (8) in einer Melkstation (10) automatisch unter der Voraussetzung zu melken, dass das Milchtier (8) ein vordefiniertes Melkkriterium erfüllt, und wobei das Tränkensystem (16) der Melkstationen (10) ausgestaltet ist, jedes in einer der Melkstationen (10) anwesende Milchtier (8) mit Wasser zu versorgen, unabhängig davon, ob das Milchtier (8) das Melkkriterium erfüllt.

6. System nach einem der vorhergehenden Ansprüche, wobei das Melksystem (20) Melkbecher (22) und eine Robotervorrichtung (21) umfasst, die in Relation zu den Melkstationen (10) derart beweglich ist, dass in jeder Melkstation (10) Melkbecher (22) automatisch mithilfe der Robotervorrichtung (21) mit den Zitzen eines in der Melkstation (10) anwesenden Milchtiers (8) verbunden werden können.

7. System nach einem der vorhergehenden Ansprüche, wobei der Unterbringungsraum (2) einen Fütterungsbereich (6) zum Füttern der Milchtiere (8) und einen Ruhebereich (7) zum Ausruhen der Milchtiere (8) umfasst, wobei der Unterbringungsraum (2) derart ausgestaltet ist, dass die Milchtiere (8) in dem Unterbringungsraum (2) frei zwischen dem Fütterungsbereich (6) und dem Ruhebereich (7) umherlaufen können, und wobei der Unterbringungsraum (2) derart ausgestaltet ist, dass die Milchtiere (8) in dem Unterbringungsraum frei von dem Fütterungsbereich (6) und von dem Ruhebereich (7) zu jeder Eintrittsöffnung (11) laufen können.

8. System nach einem der vorhergehenden Ansprüche, wobei jede Melkstation (10) derart ausgestaltet ist, dass ein Milchtier (8), das vorwärts in die Melkstation (10) durch die Eintrittsöffnung (11) davon gelaufen ist, die Melkstation (10) über die Eintrittsöffnung (11) durch Rückwärtslaufen verlassen kann.

9. System nach Anspruch 1, wobei das Tränkensystem (16) der Melkstationen (10) ausgestaltet ist, Wasser in unbegrenzten Mengen (ad libitum) für jedes Milchtier (8), das eine der Melkstationen (10) besucht, bereitzustellen.

10. System nach einem der vorhergehenden Ansprüche, wobei das Tränkensystem (16) der Melkstationen (10) mindestens eine Tränke (17) umfasst, die an den Kopfenden der Melkstationen (10), den Eintrittsöffnungen (11) gegenüberliegend, angeordnet ist, und wobei jede Melkstation (10) eine Nackenarretiervorrichtung (18) umfasst, die mit einer Aktuatorvorrichtung (40) versehen ist und durch die Aktuatorvorrichtung (40) zwischen einem arretierten Zustand, in dem ein Milchtier (8), das sich mit seinem Kopf über oder in der Tränke (17) der Melkstation (10) befindet, am Nacken durch die Nackenarretiervorrichtung (18) arretiert werden kann, und einem freien Zustand, in dem das in der Melkstation (10) anwesende Milchtier (8) seinen Kopf frei in und/oder aus der Nackenarretiervorrichtung (18) bewegen kann, bewegt werden kann.

11. System nach Anspruch 10, wobei die mindestens eine Tränke (17) in Relation zu der Nackenarretiervorrichtung (18) jeder Melkstation (10) derart positioniert ist, dass ein in einer der Melkstationen (10) anwesendes Milchtier (8) seinen Kopf und/oder Nacken durch die Nackenarretiervorrichtung (18) der Melkstation (10) schieben muss, um Wasser aus der Tränke (17) zu trinken.

12. System nach Anspruch 10 oder 11, wobei die Melkstationen (10) an den Kopfenden davon, den Eintrittsöffnungen (11) gegenüberliegend, durch einen fixierten Tränkenzaun (14) begrenzt sind, an dem die Nackenarretiervorrichtungen (18) der Melkstationen (10) angeordnet sind, und wobei die mindestens eine Tränke (17) entlang des Tränkenzauns (14) derart positioniert ist, dass ein in einer der Melkstationen (10) anwesendes Milchtier (8) seinen Kopf und/oder Nacken durch den Tränkenzaun (14) schieben muss, um Wasser aus der Tränke (17) zu trinken.

13. System nach einem der Ansprüche 10-12, wobei das Tränkensystem (16) der Melkstationen (10) eine Mehrzahl von separaten Tränken (17) umfasst, wobei jede Melkstation (10) eine der Tränken (17) umfasst.

14. System nach Anspruch 13, wobei das Tränkensystem (16) mit einer Versorgungsvorrichtung für das Versorgen jeder der Tränken (17) mit Wasser versehen ist, und wobei die Versorgungsvorrichtung ausgestaltet ist, die jeweilige Menge an Wasser, mit der jede der Tränken (17) durch die Versorgungsvorrichtung versorgt wird, zu bestimmen.

15. System nach einem der vorhergehenden Ansprüche, wobei das System mit einem Tieridentifikationssystem (23, 24) zum Identifizieren jedes in einer der Melkstationen (10) anwesenden Milchtiers (8) versehen ist.

16. Verfahren zum Melken einer Gruppe von Milchtieren (8), insbesondere Kühen, in einem System (1) nach einem oder mehreren der vorhergehenden Ansprüche, und wobei das Verfahren umfasst:
- das Bereitstellen von Wasser mithilfe des Tränkensystems (16) zu jedem Milchtier (8), das eine der Melkstationen (10) besucht,
- das Melken jedes Milchtiers (8), das eine der Melkstationen (10) besucht, unter der Voraussetzung, dass das Milchtier (10) ein vordefiniertes Melkkriterium erfüllt.

## Revendications

1. Système pour la traite d'un groupe d'animaux laitiers (8), plus particulièrement de vaches, lequel système comprend :
- un espace d'accueil (2) pour les animaux laitiers (8),
- une pluralité de postes de traite (10) agencés chacun à une position fixe et à proximité les uns des autres, les postes de traite (10) comprenant chacun une ouverture d'entrée (11) pour l'entrée d'un animal laitier (8) depuis l'espace d'accueil (2) jusqu'au poste de traite (10),
- un système de traite automatique (20) pour la traite automatique d'animaux laitiers (8) présents dans les postes de traite (10),
- un système d'abreuvement (16) configuré pour fournir de l'eau pour les animaux laitiers (8),
**caractérisé en ce que**
les postes de traite (10) comprennent le système d'abreuvement (16), et le système d'abreuvement (16) des postes de traite (10) est la seule installation d'abreuvement pour les animaux laitiers (8) dans l'espace d'accueil (2) où les animaux laitiers (8) peuvent satisfaire leurs besoins quotidiens en eau, et
l'espace d'accueil (2) est configuré de manière à ce que les animaux laitiers (8) dans l'espace d'accueil (2) puissent se déplacer librement depuis l'espace d'accueil (2) jusqu'à chaque ouverture d'entrée (11).

2. Système selon la revendication 1, dans lequel chacune des ouvertures d'entrée (11) des postes de traite (10) est ouverte en permanence.

3. Système selon l'une quelconque des revendications précédentes, dans lequel les postes de traite (10) comprennent au moins trois postes de traite (10), de préférence au moins six postes de traite (10).

4. Système selon l'une quelconque des revendications précédentes, dans lequel l'espace d'accueil (2) est configuré pour contenir un nombre prédéfini d'animaux laitiers (8), et dans lequel le nombre de postes de traite (10) est adapté au nombre prédéfini d'animaux laitiers (8) de sorte que le système comprenne au moins un poste de traite (10) pour 20 animaux laitiers, de préférence au moins un poste de traite (10) pour 15 animaux laitiers, de préférence encore au moins un poste de traite (10) pour 10 animaux laitiers.

5. Système selon l'une quelconque des revendications précédentes, dans lequel le système de traite (20) est configuré pour traire un animal laitier (8) dans un poste de traite (10) automatiquement à condition que ledit animal laitier (8) réponde à un critère de traite prédéfini, et dans lequel le système d'abreuvement (16) des postes de traite (10) est configuré pour approvisionner en eau chaque animal laitier (8) présent dans l'un des postes de traite (10) que ledit animal laitier (8) réponde ou non au critère de traite.

6. Système selon l'une quelconque des revendications précédentes, dans lequel le système de traite (20) comprend des gobelets trayeurs (22) et un dispositif robot (21) mobile par rapport aux postes de traite (10) de sorte que, dans chaque poste de traite (10), des gobelets trayeurs (22) puissent être reliés automatiquement au moyen du dispositif robot (21) aux trayons d'un animal laitier (8) présent dans ledit poste de traite (10).

7. Système selon l'une quelconque des revendications précédentes, dans lequel l'espace d'accueil (2) comporte une zone d'alimentation (6) pour l'alimentation des animaux laitiers (8) et une zone de repos (7) pour le repos des animaux laitiers (8), dans lequel l'espace d'accueil (2) est configuré de manière à ce que les animaux laitiers (8) dans l'espace d'accueil (2) puissent déambuler librement entre la zone d'alimentation (6) et la zone de repos (7), et dans lequel l'espace d'accueil (2) est configuré de manière à ce que les animaux laitiers (8) dans l'espace d'accueil puissent se déplacer librement depuis la zone d'alimentation (6) et depuis la zone de repos (7) jusqu'à chaque ouverture d'entrée (11).

8. Système selon l'une quelconque des revendications précédentes, dans lequel chaque poste de traite (10) est configuré de manière à ce qu'un animal laitier (8) qui s'est avancé jusque dans le poste de traite (10) en passant par son ouverture d'entrée (11) puisse sortir dudit poste de traite (10) par l'ouverture d'entrée (11) en reculant.

9. Système selon la revendication 1, dans lequel le système d'abreuvement (16) des postes de traite (10) est configuré pour fournir de l'eau en quantités illimitées (ad libitum) pour chaque animal laitier (8) qui visite l'un des postes de traite (10).

10. Système selon l'une quelconque des revendications précédentes, dans lequel le système d'abreuvement (16) des postes de traite (10) comprend au moins une auge d'abreuvement (17) agencée aux extrémités de tête des postes de traite (10) situées à l'opposé des ouvertures d'entrée (11), et dans lequel chaque poste de traite (10) comprend un dispositif de blocage du cou (18) pourvu d'un dispositif actionneur (40) et commutable, par ledit dispositif actionneur (40), entre un état bloqué dans lequel un animal laitier (8), situé avec la tête au-dessus ou à l'intérieur de l'auge d'abreuvement (17) dudit poste de traite (10), peut être bloqué au niveau du cou par le dispositif de blocage du cou (18) et un état libre dans lequel un animal laitier (8) présent dans ledit poste de traite (10) est libre de rentrer la tête dans le dispositif de blocage du cou (18) et/ou de l'en sortir.

11. Système selon la revendication 10, dans lequel l'au moins une auge d'abreuvement (17) est positionnée par rapport au dispositif de blocage du cou (18) de chaque poste de traite (10) de sorte qu'un animal laitier (8) présent dans l'un des postes de traite (10) doive pousser la tête et/ou le cou à travers le dispositif de blocage du cou (18) dudit poste de traite (10) pour boire de l'eau de l'auge d'abreuvement (17).

12. Système selon la revendication 10 ou 11, dans lequel les postes de traite (10), à leurs extrémités de tête situées à l'opposé des ouvertures d'entrée (11), sont délimités par une barrière d'abreuvement fixe (14), sur laquelle sont agencés les dispositifs de blocage du cou (18) des postes de traite (10), et dans lequel l'au moins une auge d'abreuvement (17) est positionnée le long de la barrière d'abreuvement (14) de sorte qu'un animal laitier (8) présent dans l'un des postes de traite (10) doive pousser la tête et/ou la cou à travers la barrière d'abreuvement (14) pour boire de l'eau de l'auge d'abreuvement (17).

13. Système selon l'une quelconque des revendications 10 à 12, dans lequel le système d'abreuvement (16) des postes de traite (10) comprend une pluralité d'auges d'abreuvement (17) distinctes, chaque poste de traite (10) comprenant l'une desdites auges d'abreuvement (17).

14. Système selon la revendication 13, dans lequel le système d'abreuvement (16) est doté d'un dispositif d'approvisionnement pour l'approvisionnement en eau de chacune des auges d'abreuvement (17), et dans lequel le dispositif d'approvisionnement est configuré pour déterminer la quantité respective d'eau approvisionnée à chacune des auges d'abreuvement (17) par le dispositif d'abreuvement.

15. Système selon l'une quelconque des revendications précédentes, lequel système est doté d'un système d'identification d'animal (23, 24) pour l'identification de chaque animal laitier (8) présent dans l'un des postes de traite (10).

16. Procédé de traite d'un groupe d'animaux laitiers (8), plus particulièrement de vaches, dans un système (1) selon une ou plusieurs des revendications précédentes, et lequel procédé comprend :
- la fourniture d'eau, au moyen du système d'abreuvement (16), à chaque animal laitier (8) qui visite l'un des postes de traite (10),
- la traite de chaque animal laitier (8) qui visite l'un des postes de traite (10) à condition que ledit animal laitier (10) réponde à un critère de traite prédéfini.
